# EUROPEAN PATENT SPECIFICATION

(11) **EP 3 350 682 B1**
(45) Date of publication and mention of the grant of the patent: **26.10.2022**
(21) Application number: 16775417.5
(22) Date of filing: 20.09.2016
(51) Int. Cl.: G06F 3/0484, G06T 11/20, G06F 3/0488, G06F 3/04883, G06F 16/904

(54) **INTERACTIVE DATA VISUALIZATION USER INTERFACE WITH GESTURE-BASED DATA FIELD SELECTION**
BENUTZERSCHNITTSTELLE FÜR INTERAKTIVE DATENANSICHT MIT GESTENBASIERTER DATENFELDAUSWAHL
INTERFACE UTILISATEUR DE VISUALISATION DE DONNÉES INTERACTIVE À SÉLECTION DE CHAMP DE DONNÉES REPOSANT SUR UN GESTE

(30) Priority: 20.09.2015 US 201562221084 P; 02.06.2016 US 201615172076; 02.06.2016 US 201615172052; 02.06.2016 US 201615172085
(43) Date of publication of application: 25.07.2018
(73) Proprietor: Tableau Software, Inc., Seattle, WA 98103 (US)
(72) Inventor: STEWART, Robin, Seattle, WA 98103 (US)
(74) Representative: Mewburn Ellis LLP
(86) International application number: PCT/US2016/052689
(87) International publication number: WO 2017/049325

(56) References cited:
- EP-A1- 2 386 940
- US-A1- 2014 282 276
- US-A1- 2015 254 369
- US-B1- 8 527 909
- Devexpress: "DevExpress Dashboards: Working With Charts", , 20 August 2015 (2015-08-20), XP055906007, Retrieved from the Internet: URL:https://youtu.be/NR8WmjiEraE [retrieved on 2022-03-28]

## Description

### TECHNICAL FIELD

The disclosed implementations relate generally to data visualization and more specifically to systems, methods, and user interfaces that enable a user to interactively explore and investigate a data set.

### BACKGROUND

Data visualization is a powerful tool for exploring data sets. Graphical views provide user-friendly ways to visualize and interpret data. However, the task of effectively visualizing databases imposes significant demands on the human-computer interface to the visualization system, especially on a mobile device with a small screen.

As computing and networking speeds increase, data visualization that was traditionally performed on desktop computers can also be performed on portable electronic devices, such as smart phones, tablets, and laptop computers. These portable devices typically use touch-sensitive surfaces (e.g., touch screens and/or trackpads) as input devices. These portable devices typically have significantly smaller displays than desktop computers. Thus, additional challenges arise in using touch-sensitive surfaces to manipulate graphical views of data in a user-friendly manner on portable devices.

Consequently, there is a need for faster, more efficient methods and interfaces for manipulating graphical views of data. Such methods and interfaces may complement or replace conventional methods for visualizing data. Such methods and interfaces reduce the cognitive burden on a user and produce a more efficient human-machine interface. For battery-operated devices, such methods and interfaces conserve power and increase the time between battery charges.

US8527909B1 discloses displaying and manipulating data charts.

Devexpress: "DevExpress Dashboards: Working With Charts" URL:https://youtu.be/NR8WmjiEraE discloses displaying and manipulating data charts, including adding further qualitative and qualitative variables to a displayed data chart.

### SUMMARY

The above deficiencies and other problems associated with visualizing data are reduced or eliminated by the disclosed methods, devices, graphical user interfaces, and computer readable storage media. Various implementations of methods, devices, graphical user interfaces, and storage media within the scope of this invention as defined by the appended claims each have several aspects, no single one of which is solely responsible for the attributes described herein.

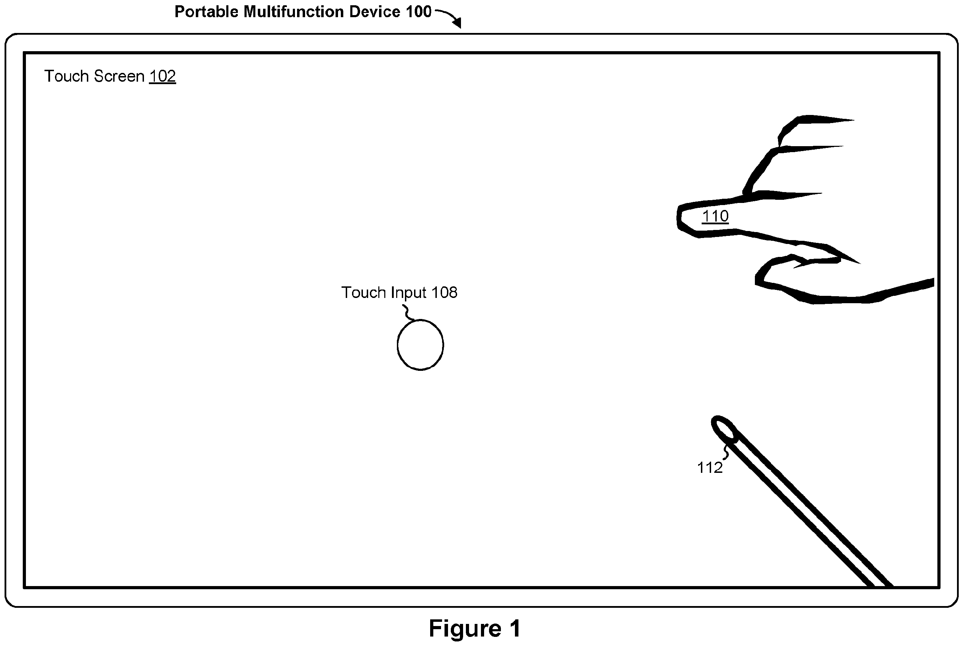

The claimed invention corresponds to the implementations disclosed with respect to figures 1-4, 6A-6S and their corresponding passages in the description. Other implementations disclosed herein are useful for understanding the present invention.

Thus methods, systems, and graphical user interfaces are provided that enable users to more easily and more efficiently analyze data sets.

### BRIEF DESCRIPTION OF THE DRAWINGS

For a better understanding of the aforementioned implementations of the invention as well as additional implementations thereof, reference should be made to the Description of Implementations below, in conjunction with the following drawings in which like reference numerals refer to corresponding parts throughout the figures.
Figure 1 illustrates a portable multifunction device having a touch screen, in accordance with some implementations.
Figure 2 illustrates a multifunction device having a touch-sensitive surface that is separate from the display, in accordance with some implementations.
Figure 3A is a block diagram illustrating a portable multifunction device having a touch screen, in accordance with some implementations.
Figure 3B is a block diagram illustrating a multifunction device having a touch-sensitive surface, in accordance with some implementations.
Figure 4 is a block diagram of a computing device according to some implementations.
Figures 5A-5I illustrate user interfaces for adjusting data visualization filters, in accordance with some implementations.
Figures 6A - 6S illustrate a graphical user interface that provides for interactive hierarchical filtering, in accordance with some implementations.
Figures 7A - 7N illustrate a process of adding an additional dimension to a data visualization based on an interaction gesture with an existing data visualization, in accordance with some implementations.
Figures 8A - 8M illustrate an alternative animated transition when an additional dimension is added to an existing data visualization, in accordance with some implementations.
Figures 9A - 9D illustrate a process of adding an additional measure to a data visualization based on an interaction gesture with an existing data visualization, in accordance with some implementations.
Figures 10A - 10C illustrate an animated transition when selecting a different dimension for an existing data visualization, in accordance with some implementations.

Reference will now be made in detail to implementations, examples of which are illustrated in the accompanying drawings. In the following detailed description, numerous specific details are set forth in order to provide a thorough understanding of the present invention. However, it will be apparent to one of ordinary skill in the art that the present invention may be practiced without these specific details.

### DESCRIPTION OF IMPLEMENTATIONS

As portable electronic devices become more compact, and the number of functions performed by applications on any given device increase, it has become a significant challenge to design user interfaces that allow users to interact with the applications easily. This challenge is particularly significant for portable devices with smaller screens and/or limited input devices. In addition, data visualization applications need to provide user-friendly ways to explore data in order to enable a user to extract significant meaning from a particular data set. Some application designers have resorted to using complex menu systems to enable a user to perform desired functions. These conventional user interfaces often result in complicated key sequences and/or menu hierarchies that must be memorized by the user and/or that are otherwise cumbersome and/or not intuitive to use.

The methods, devices, and graphical user interfaces (GUIs) described herein make manipulation of data sets and data visualizations more efficient and intuitive for a user. In some instances, a data visualization is referred to as a "chart." A number of different intuitive user interfaces for data visualizations are described below. For example, applying a filter to a data set can be accomplished by a simple touch input on a given portion of a displayed data visualization rather than via a nested menu system.

Attention is now directed toward implementations of portable devices with touch-sensitive displays. Implementations of electronic devices and user interfaces for such devices are described. In some implementations, the device is a portable communications device, such as a mobile telephone, that also contains other functions, such as PDA and/or music player functions. Other portable electronic devices include laptops or tablet computers with touch-sensitive surfaces (e.g., touch screen displays and/or touch pads). It should also be understood that, in some implementations, the device is not a portable communications device, but is a desktop computer with a touch-sensitive surface (e.g., a touch screen display and/or a touch pad). In the discussion that follows, an electronic device that includes a display and a touch-sensitive surface is described. It should be understood, however, that the electronic device optionally includes one or more other physical user-interface devices, such as a physical keyboard, a mouse, a microphone, and/or a joystick.

Figure 1 illustrates portable multifunction device 100 having a touch screen 102, in accordance with some implementations. In some implementations, the device 100 is a mobile phone, a laptop computer, a personal digital assistant (PDA), or a tablet computer. The touch screen 102 is also sometimes called a touch-sensitive display and/or a touch-sensitive display system. In some implementations, the touch screen 102 displays one or more graphics within a user interface (UI). In some implementations, a user is enabled to select one or more of the graphics by making a touch input (e.g., touch input 108) on the graphics. In some instances, the touch input is a contact on the touch screen. In some instances, the touch input is a gesture that includes a contact and movement of the contact on the touch screen. In some instances, the gesture optionally includes one or more taps, one or more swipes (from left to right, right to left, upward and/or downward) and/or a rolling of a finger (from right to left, left to right, upward and/or downward) that has made contact with device 100. For example, a touch input may be made with one or more fingers 110 (not drawn to scale in the figure) or one or more styluses 112 (not drawn to scale in the figure). In some implementations, selection of one or more graphics occurs when the user breaks contact with the one or more graphics. In some circumstances, inadvertent contact with a graphic does not select the graphic. For example, a swipe gesture that sweeps over a visual mark optionally does not select the visual mark when the gesture corresponding to selection is a tap. In some implementations, the device 100 includes one or more physical buttons and/or other input/output devices, such as a microphone for verbal inputs.

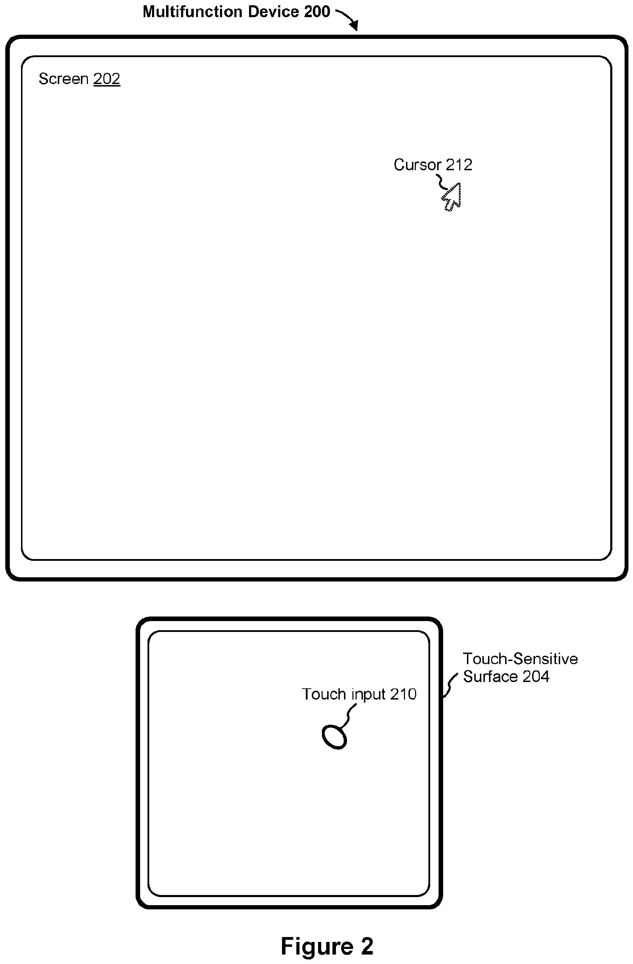

Figure 2 illustrates a multifunction device 200 in accordance with some implementations. The device 200 need not be portable. In some implementations, the device 200 is a laptop computer, a desktop computer, a tablet computer, or an educational device. The device 200 includes a screen 202 and a touch-sensitive surface 204. In some implementations, the screen 202 displays one or more graphics within a UI. In some implementations, a user is enabled to select one or more of the graphics by making a touch input (e.g., touch input 210) on the touch-sensitive surface 204 such that a corresponding cursor (e.g., the cursor 212) on the screen 202 selects the one or more graphics. For example, when an input is detected on the touch-sensitive surface 204 while the cursor 212 is over a particular user interface element (e.g., a button, window, slider or other user interface element), the particular user interface element is adjusted in accordance with the detected input.

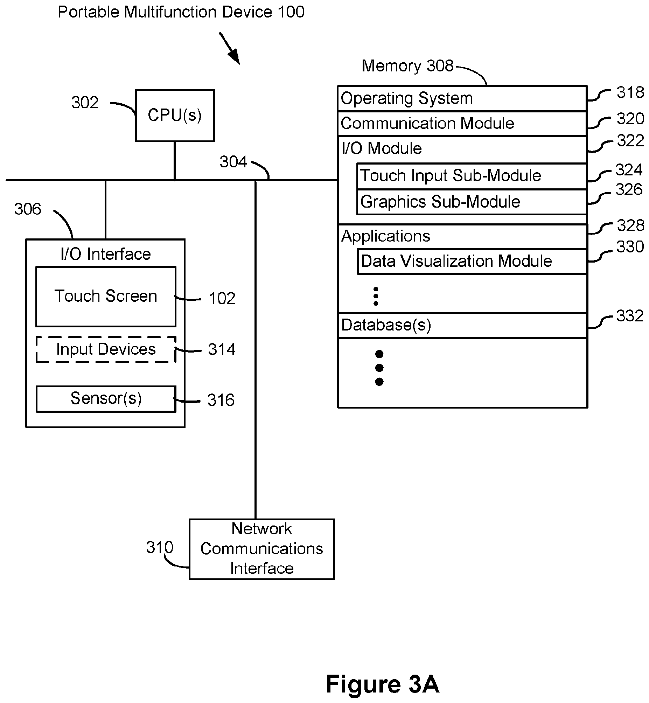

Figure 3A is a block diagram illustrating a portable multifunction device 100, in accordance with some implementations. It should be appreciated that the device 100 is only one example of a portable multifunction device. In some implementations, the device 100 has more or fewer components than shown, combines two or more components, or has a different configuration or arrangement of the components. The various components shown in Figure 3A are implemented in hardware, software, firmware, or a combination of hardware, software, and/or firmware, including one or more signal processing and/or application specific integrated circuits.

The device 100 includes one or more processing units (CPU's) 302, an input/output (I/O) subsystem 306, memory 308 (which optionally includes one or more computer readable storage media), and a network communications interface 310. In some implementations, these components communicate over one or more communication buses or signal lines 304. In some implementations, the communication buses 304 include circuitry (sometimes called a chipset) that interconnects and controls communications between system components.

The memory 308 includes high-speed random access memory, such as DRAM, SRAM, DDR RAM or other random access solid state memory devices, and may include non-volatile memory, such as one or more magnetic disk storage devices, optical disk storage devices, flash memory devices, or other non-volatile solid state storage devices. In some implementations, the memory 308 includes one or more storage devices remotely located from processor(s) 302. The memory 308, or alternately the non-volatile memory device(s) within the memory 308, comprises a non-transitory computer readable storage medium.

In some implementations, the software components stored in the memory 308 include an operating system 318, a communication module 320, an input/output (I/O) module 322, and one or more applications 328 (e.g., a data visualization application 422). In some implementations, one or more of the various modules comprises a set of instructions in memory 308. In some implementations, the memory 308 stores one or more data sets in one or more database(s) 332.

The operating system 318 (e.g., Darwin, RTXC, LINUX, UNIX, OS X, WINDOWS, or an embedded operating system such as VxWorks) includes various software components and/or drivers for controlling and managing general system tasks (e.g., memory management, storage device control, power management, etc.) and facilitates communication between various hardware, software, and/or firmware components.

The communication module 320 facilitates communication with other devices over one or more external ports and also includes various software components for handling data received from other devices.

The I/O module 322 includes a touch input sub-module 324 and a graphics sub-module 326. In some implementations, the touch input sub-module 324 detects touch inputs with touch screen 102 and other touch sensitive devices (e.g., a touchpad or physical click wheel). The touch input sub-module 324 includes various software components for performing various operations related to detection of a touch input, such as determining if contact has occurred (e.g., detecting a finger-down event), determining if there is movement of the contact and tracking the movement across the touch-sensitive surface (e.g., detecting one or more finger-dragging events), and determining if the contact has ceased (e.g., detecting a finger-up event or a break in contact). The touch input sub-module 324 receives contact data from the touch-sensitive surface (e.g., touch screen 102). In some implementations, these operations are applied to single touch inputs (e.g., one finger contacts) or to multiple simultaneous touch inputs (e.g., "multitouch"/multiple finger contacts). In some implementations, the touch input sub-module 324 detects contact on a touchpad.

In some implementations, the touch input sub-module 324 detects a gesture input by a user. Different gestures on the touch-sensitive surface have different contact patterns. In some implementations, a gesture is detected by detecting a particular contact pattern. For example, detecting a finger tap gesture includes detecting a finger-down event followed by detecting a finger-up (lift off) event at the same position (or substantially the same position) as the finger-down event (e.g., at the position of an data mark). As another example, detecting a finger swipe gesture on the touch-sensitive surface includes detecting a finger-down event followed by detecting one or more finger-dragging events, and subsequently followed by detecting a finger-up (lift off) event.

The graphics sub-module 326 includes various known software components for rendering and displaying graphics on the touch screen 102 or other display, including components for changing the visual impact (e.g., brightness, transparency, saturation, contrast or other visual property) of graphics that are displayed. As used herein, the term "graphics" includes any object that can be displayed to a user, including data visualizations, icons (such as user-interface objects including soft keys), text, digital images, animations, and the like. In some implementations, the graphics sub-module 326 stores data representing graphics to be used. In some implementations, each graphic is assigned a corresponding code. The graphics sub-module 326 receives (e.g., from applications) one or more codes specifying graphics to be displayed along with, if necessary, coordinate data and other graphic property data, and then generates screen image data to output to the display or touch screen.

In some implementations, the applications 328 include a data visualization module 330 or data visualization application 422 for displaying graphical views of data and one or more other applications. Examples of other applications that are optionally stored in the memory 308 include word processing applications, email applications, and presentation applications.

In conjunction with the I/O interface 306, including the touch screen 102, the CPU(s) 302, and/or the database(s) 332, the data visualization module 330 includes executable instructions for displaying and manipulating various graphical views of data.

Each of the above identified modules and applications corresponds to a set of executable instructions for performing one or more functions described above and the methods described in this application (e.g., the computer-implemented methods and other information processing methods described herein). These modules (i.e., sets of instructions) need not be implemented as separate software programs, procedures, or modules, and thus various subsets of these modules are, optionally, combined or otherwise re-arranged in various implementations. In some implementations, the memory 308 stores a subset of the modules and data structures identified above. In some implementations, the memory 308 stores additional modules and data structures not described above.

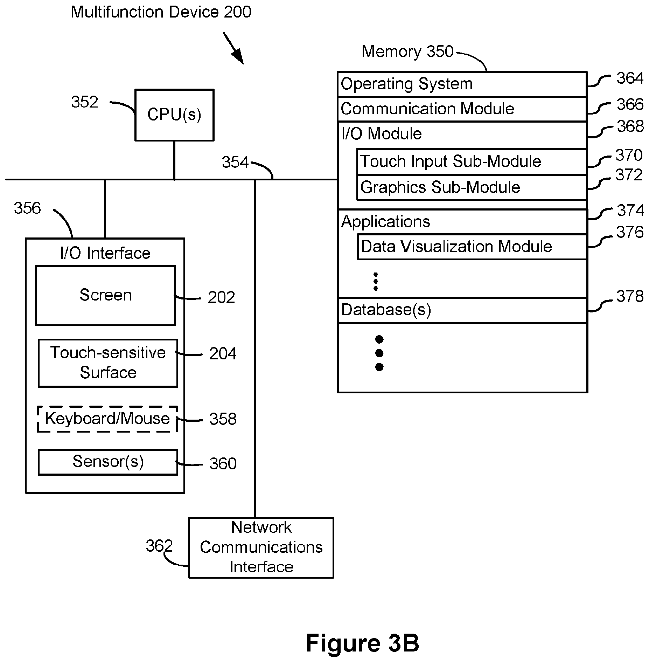

Figure 3B is a block diagram illustrating a multifunction device 200, in accordance with some implementations. It should be appreciated that the device 200 is only one example of a multifunction device. In some implementations, the device 200 has more or fewer components than shown, combines two or more components, or has a different configuration or arrangement of the components. The various components shown in Figure 3B are implemented in hardware, software, or firmware, or a combination of hardware, software, and/or firmware, including one or more signal processing and/or application specific integrated circuits.

The device 200 typically includes one or more processing units/cores (CPUs) 352, one or more network or other communications interfaces 362, memory 350, an I/O interface 356, and one or more communication buses 354 for interconnecting these components. In some implementations, the communication buses 354 include circuitry (sometimes called a chipset) that interconnects and controls communications between system components.

The I/O interface 306 includes a screen 202 (also sometimes called a display), a touch-sensitive surface 204, and one or more sensor(s) 360 (e.g., optical, acceleration, proximity, and/or touch-sensitive sensors). In some implementations, the I/O interface 356 includes a keyboard and/or mouse (or other pointing device) 358. The I/O interface 356 couples input/output peripherals on the device 200, such as the screen 202, the touch-sensitive surface 204, other input devices 358, and one or more sensor(s) 360, to the CPU(s) 352 and/or the memory 350.

The screen 202 provides an output interface between the device and a user. The screen 202 displays visual output to the user. In some implementations, the visual output includes graphics, text, icons, data marks, and any combination thereof (collectively termed "graphics"). In some implementations, some or all of the visual output corresponds to user-interface objects. In some implementations, the screen 202 uses LCD (liquid crystal display) technology, LPD (light emitting polymer display) technology, or LED (light emitting diode) technology, although other display technologies are used in other implementations.

In addition to the touch screen, the device 200 includes a touch-sensitive surface 204 (e.g., a touchpad) for detecting touch inputs. The touch-sensitive surface 204 accepts input from the user via touch inputs (e.g., the touch input 210 in Figure 2). The touch-sensitive surface 204 (along with any associated modules and/or sets of instructions in memory 350) detects touch inputs and converts the detected inputs into interaction with user-interface objects (e.g., one or more icons, data marks, or images) that are displayed on the screen 202. Commonly, a point of contact between the touch-sensitive surface 204 and the user corresponds to a finger of the user.

The memory 350 includes high-speed random access memory, such as DRAM, SRAM, DDR RAM or other random access solid state memory devices. In some implementations, the memory includes non-volatile memory, such as one or more magnetic disk storage devices, optical disk storage devices, flash memory devices, or other non-volatile solid state storage devices. In some implementations, the memory 350 includes one or more storage devices remotely located from CPU(s) 352. In some implementations, the software components stored in the memory 350 include an operating system 364, a communication module 366, an input/output (I/O) module 368, and one or more applications 374 (e.g., a data visualization application 422). In some implementations, one or more of the various modules comprises a set of instructions in the memory 350. In some implementations, the memory 350 stores one or more data sets in one or more database(s) 378. In some implementations, the I/O module 368 includes a touch input sub-module 370 and a graphics sub-module 372. In some implementations, the applications 374 include data visualization module 376.

In some implementations, the memory 350 stores programs, modules, and data structures analogous to the programs, modules, and data structures stored in the memory 308 of the portable multifunction device 100, or a subset thereof. In some implementations, the memory 350 stores additional programs, modules, and data structures not present in the memory 308 of the portable multifunction device 100. In some implementations, the memory 350 of the device 200 stores drawing, presentation, and word processing applications.

The device 200 also includes a power system for powering the various components. The power system optionally includes a power management system, one or more power sources (e.g., battery, alternating current (AC)), a recharging system, a power failure detection circuit, a power converter or inverter, a power status indicator (e.g., a light-emitting diode (LED)) and any other components associated with the generation, management, and distribution of power in portable devices.

Each of the above identified elements in Figure 3B is stored in one or more of the previously mentioned memory devices. Each of the above identified modules corresponds to a set of instructions for performing a function described above. The above identified modules or programs (i.e., sets of instructions) need not be implemented as separate software programs, procedures or modules, and thus various subsets of these modules are, optionally, combined or otherwise re-arranged in various implementations. In some implementations, the memory 350 stores a subset of the modules and data structures identified above. In some implementations, the memory 350 stores additional modules and data structures not described above.

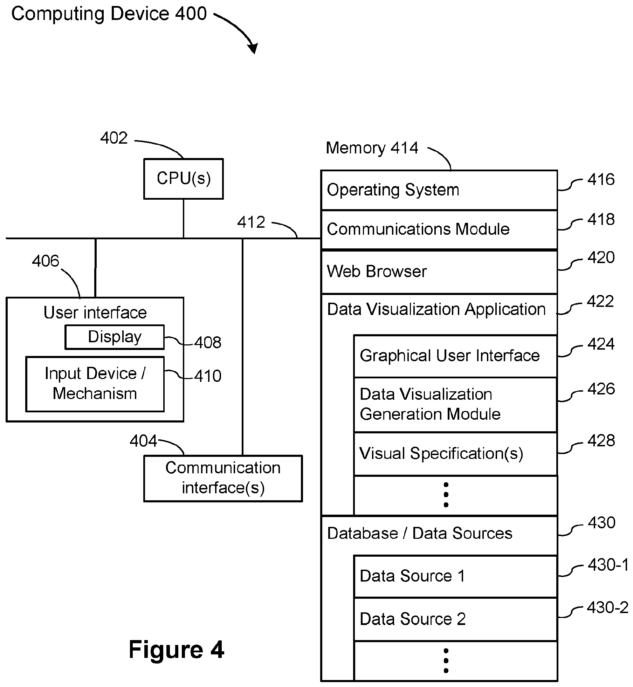

Figure 4 is a block diagram illustrating a computing device 400 that can display a graphical user interface for a data visualization application 422 in accordance with some implementations. Computing devices 400 include desktop computers, laptop computers, tablet computers, portable multifunction devices 100, multifunction devices 200, and other computing devices with a display and a processor capable of running a data visualization application 422. A computing device 400 typically includes one or more processing units/cores (CPUs) 402 for executing modules, programs, and/or instructions stored in the memory 414 and thereby performing processing operations; one or more network or other communications interfaces 404; memory 414; and one or more communication buses 412 for interconnecting these components. The communication buses 412 may include circuitry that interconnects and controls communications between system components. A computing device 400 includes a user interface 406 comprising a display device 408 and one or more input devices or mechanisms 410. In some implementations, the input device/mechanism includes a keyboard; in some implementations, the input device/mechanism includes a "soft" keyboard, which is displayed as needed on the display device 408, enabling a user to "press keys" that appear on the display 408. In some implementations, the display 408 and input device / mechanism 410 comprise a touch screen display (also called a touch sensitive display).

In some implementations, the memory 414 includes high-speed random access memory, such as DRAM, SRAM, DDR RAM or other random access solid state memory devices. In some implementations, the memory 414 includes non-volatile memory, such as one or more magnetic disk storage devices, optical disk storage devices, flash memory devices, or other non-volatile solid state storage devices. In some implementations, the memory 414 includes one or more storage devices remotely located from the CPU(s) 402. The memory 414, or alternately the non-volatile memory device(s) within the memory 414, comprises a non-transitory computer readable storage medium. In some implementations, the memory 414, or the computer readable storage medium of the memory 414, stores the following programs, modules, and data structures, or a subset thereof:
- an operating system 416 that includes procedures for handling various basic system services and for performing hardware dependent tasks;
- a communications module 418 that is used for connecting the computing device 400 to other computers and devices via the one or more communication network interfaces 404 (wired or wireless) and one or more communication networks, such as the Internet, other wide area networks, local area networks, metropolitan area networks, and so on;
- a web browser 420 (or other client application) that enables a user to communicate over a network with remote computers or devices;
- a data visualization application 422, which provides a graphical user interface 424 for a user to construct visual graphics. A user selects one or more data sources 430 (which may be stored on the computing device 400 or stored remotely), selects data fields from the data source(s), and uses the selected fields to define a visual graphic. In some implementations, the information the user provides is stored as a visual specification 428. The data visualization application 422 includes a data visualization generation module 426, which takes the user input (e.g., the visual specification), and generates a corresponding visual graphic. The data visualization application 422 then displays the generated graphic in the user interface 424. In some implementations, the data visualization application 422 executes as a standalone application (e.g., a desktop application). In some implementations, the data visualization application 422 executes within the web browser 420; and
- zero or more databases or data sources 430 (e.g., a first data source 430-1 and a second data source 430-2), which are used by the data visualization application 422. In some implementations, the data sources can be stored as spreadsheet files, CSV files, XML files, flat files, or a relational database.

Each of the above identified executable modules, applications, or set of procedures may be stored in one or more of the previously mentioned memory devices, and corresponds to a set of instructions for performing a function described above. The above identified modules or programs (i.e., sets of instructions) need not be implemented as separate software programs, procedures, or modules, and thus various subsets of these modules may be combined or otherwise re-arranged in various implementations. In some implementations, the memory 414 stores a subset of the modules and data structures identified above. Furthermore, the memory 414 may store additional modules or data structures not described above.

Although Figure 4 shows a computing device 400, Figure 4 is intended more as functional description of the various features that may be present rather than as a structural schematic of the implementations described herein. In practice, and as recognized by those of ordinary skill in the art, items shown separately could be combined and some items could be separated.

Disclosed user interfaces are optionally implemented on a portable multifunction device 100 or device 200. The following examples are shown utilizing a touch screen (e.g., a touch screen 102). However, it should be understood that, in some implementations, the inputs (e.g., finger contacts) are detected on a touch-sensitive surface on a device that is distinct from a display on the device. In addition, while the following examples are given primarily with reference to finger inputs (e.g., finger contacts, finger tap gestures, finger swipe gestures), it should be understood that, in some implementations, one or more of the finger inputs are replaced with input from another input device (e.g., a mouse based input or stylus input). For example, a swipe gesture is, optionally, replaced with a mouse click (e.g., instead of a contact) followed by movement of the cursor along the path of the swipe (e.g., instead of movement of the contact). As another example, a tap gesture is, optionally, replaced with a mouse click while the cursor is located over the location of the tap gesture (e.g., instead of detection of the contact followed by ceasing to detect the contact). Similarly, when multiple user inputs are simultaneously detected, it should be understood that multiple computer mice are, optionally, used simultaneously, or a mouse and finger contacts are, optionally, used simultaneously.

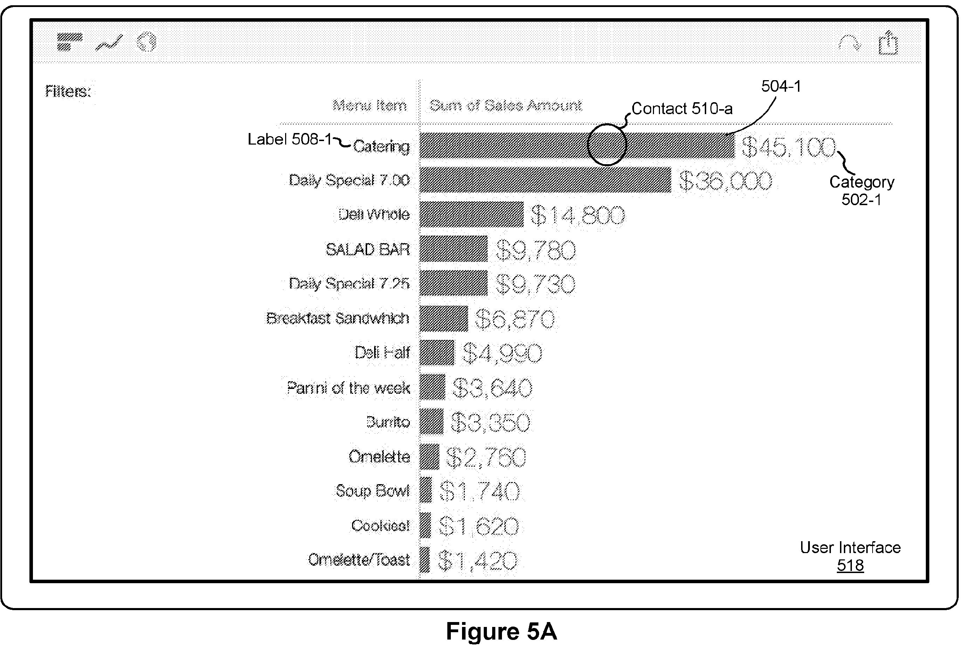

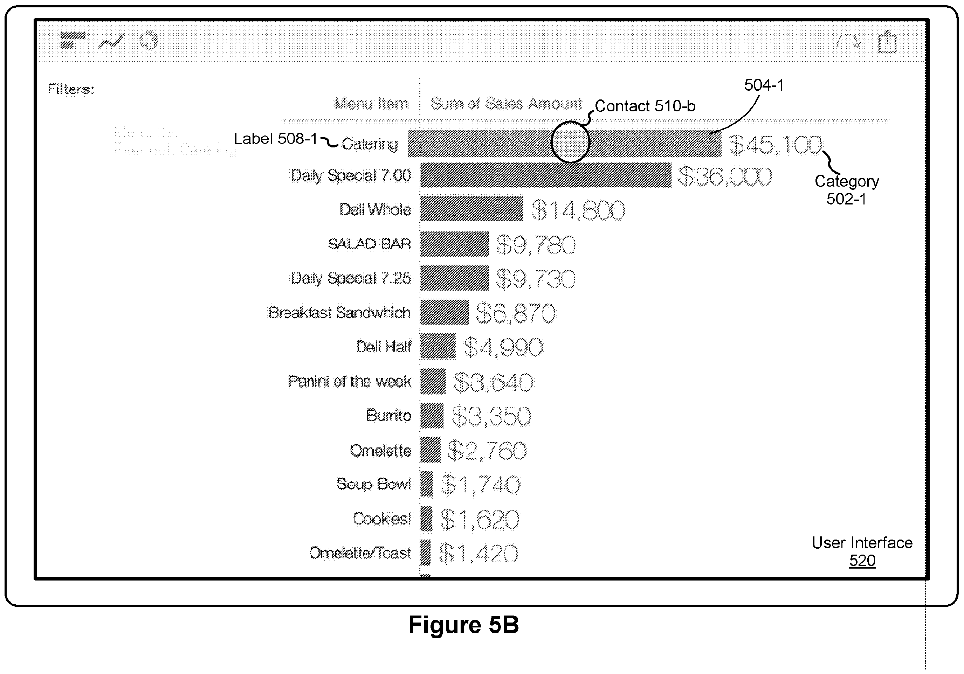

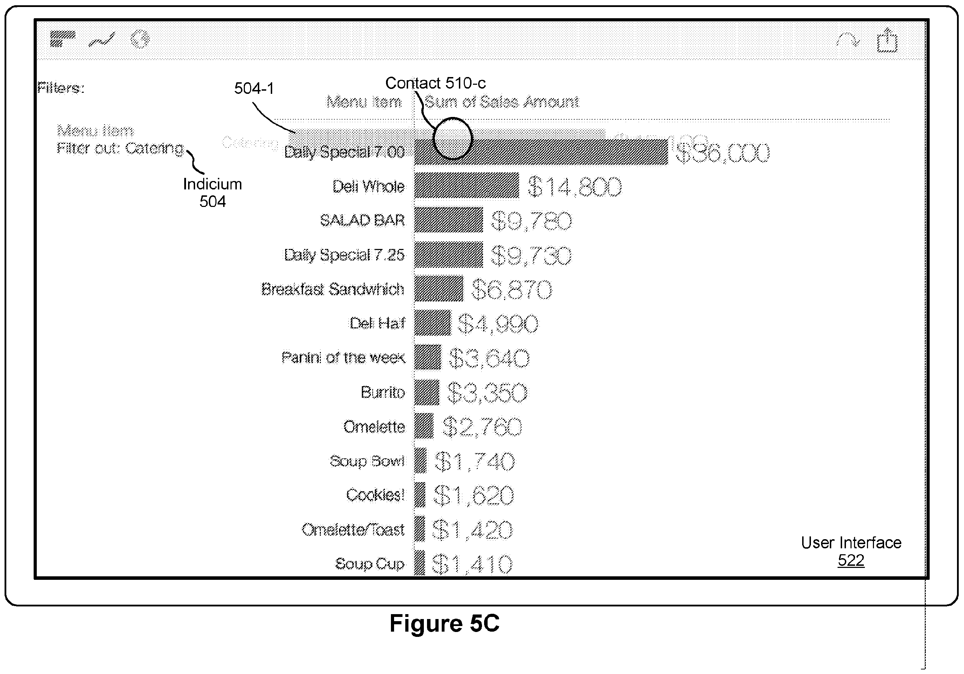

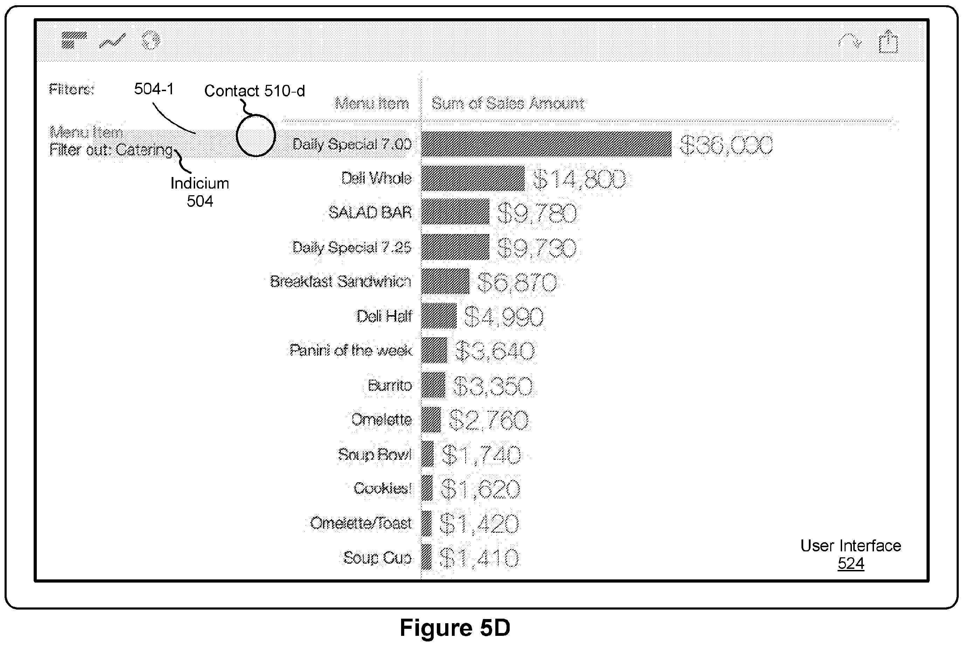

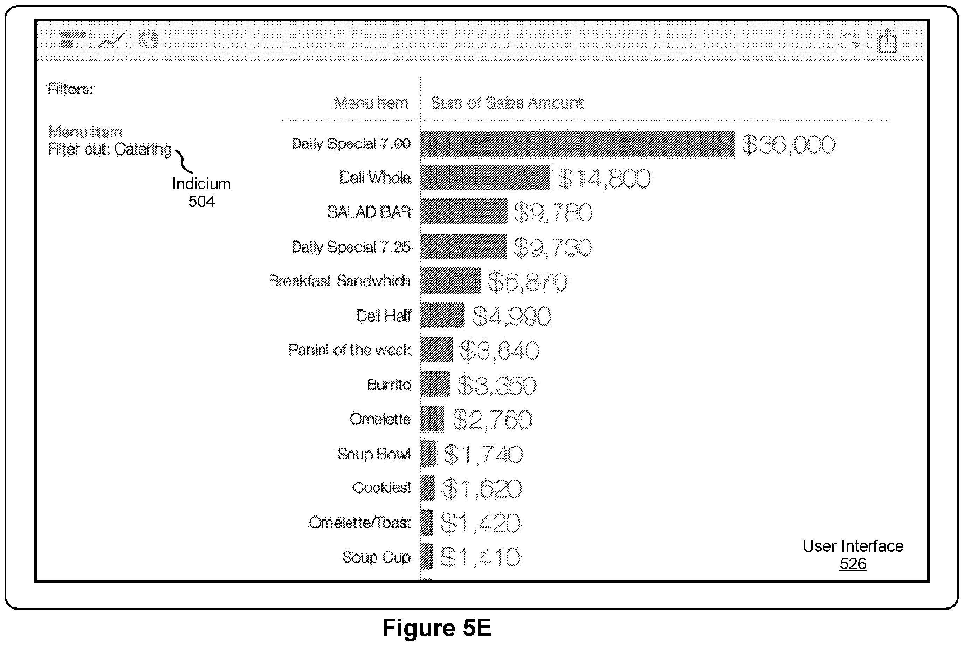

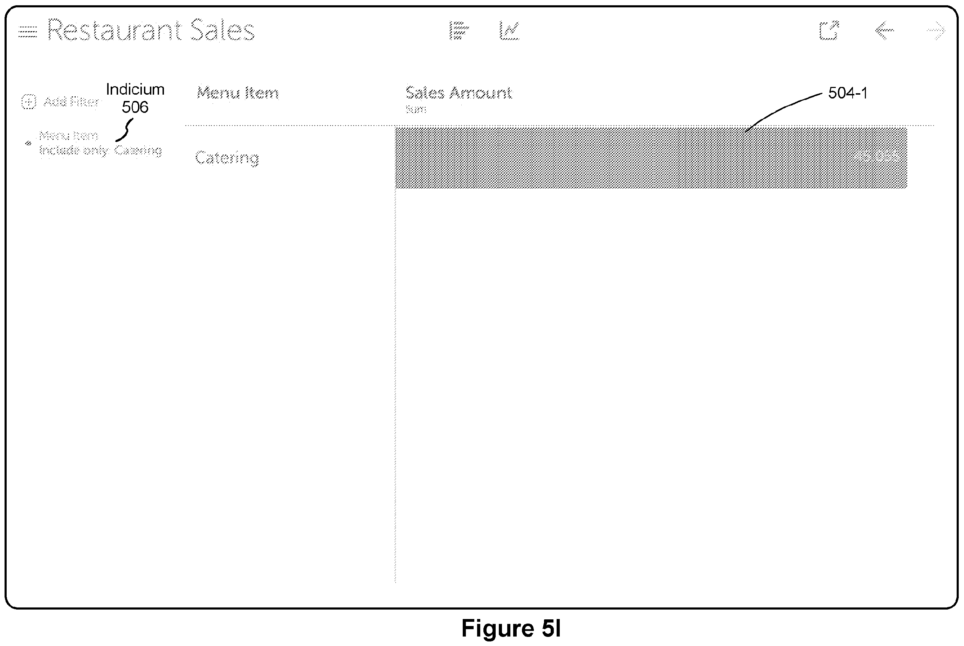

Figures 5A-5G illustrate user interfaces for adjusting data visualization filters, in accordance with some implementations. Figure 5A shows a UI 518 including a category 502-1 and a category label 508-1. Figure 5A also shows a contact 510 detected at a position 510-a corresponding to the visual mark 504-1 for the category 502-1. Figure 5B shows a UI 520 including the contact 510 detected at a position 510-b and the visual mark 504-1 for category 502-1 moving in concert with movement of the contact 510 via an animated transition. Figure 5C shows a UI 522 including the contact 510 detected at a position 510-c and the visual mark 504-1 for the category 502-1 continuing to move in concert with movement of the contact 510 via an animated transition. Figure 5C also shows an indicium 504 indicating that the category 502-1 (Catering) is being filtered out of the data as a result of the current action (e.g., the movement of the contact 510). Figure 5D shows a UI 524 including the indicium 504, the contact 510 detected at a position 510-d, and the visual mark 504-1 for category 502-1 continuing to move in concert with movement of the contact 510 via an animated transition. Figure 5E shows a UI 526 including the indicium 504 and the removal of the visual mark 504-1 for the category 502-1 from the data visualization.

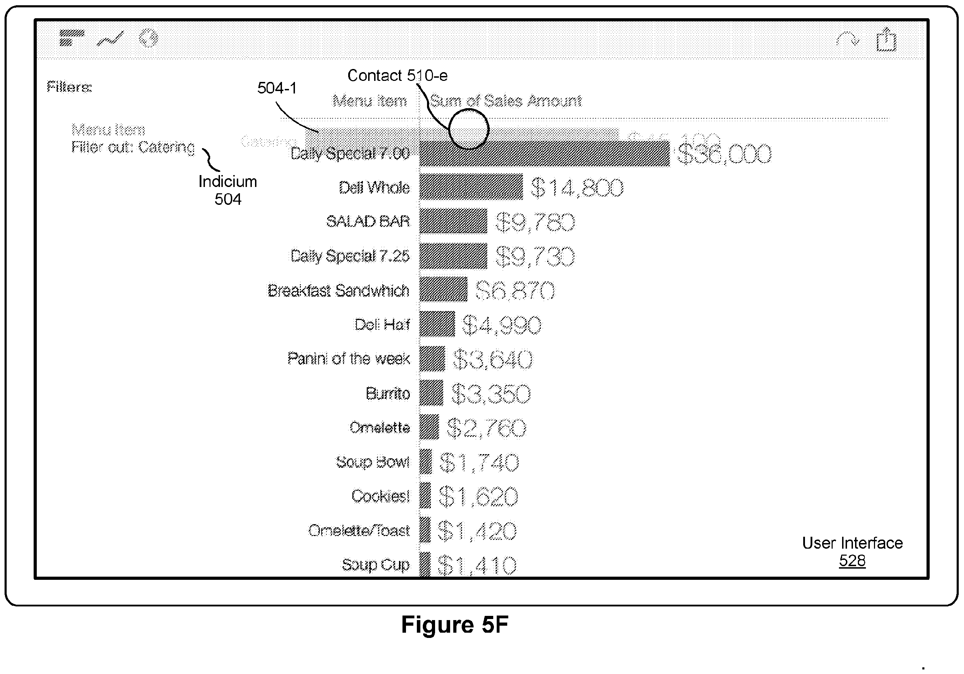

Figure 5F illustrates the process of returning a data item (Catering) to a displayed data visualization after being previously filtered out. The process starts with a contact 510 on the indicium 504, and the user returns the visual mark 504-1 for the category 502-1 to the display. Figure 5F shows a UI 528 including the indicium 504, and a contact 510 detected at position 510-e, and the visual mark for category 502-1 move in concert with movement of a contact 510 via an animated transition, bringing the visual mark 504-1 back to the data visualization.

Figures 5A - 5F thus illustrate filtering out or returning an individual visual mark 504-1 to a data visualization. Note that multiple marks can be filtered out. In some instances, a user filters out one mark at a time, and may intersperse removing and returning visual marks to the data visualization. Some implementations enable a user to remove or return multiple visual marks simultaneously. In this illustrated implementation, moving a visual mark 504-1 to the left removes just that individual item.

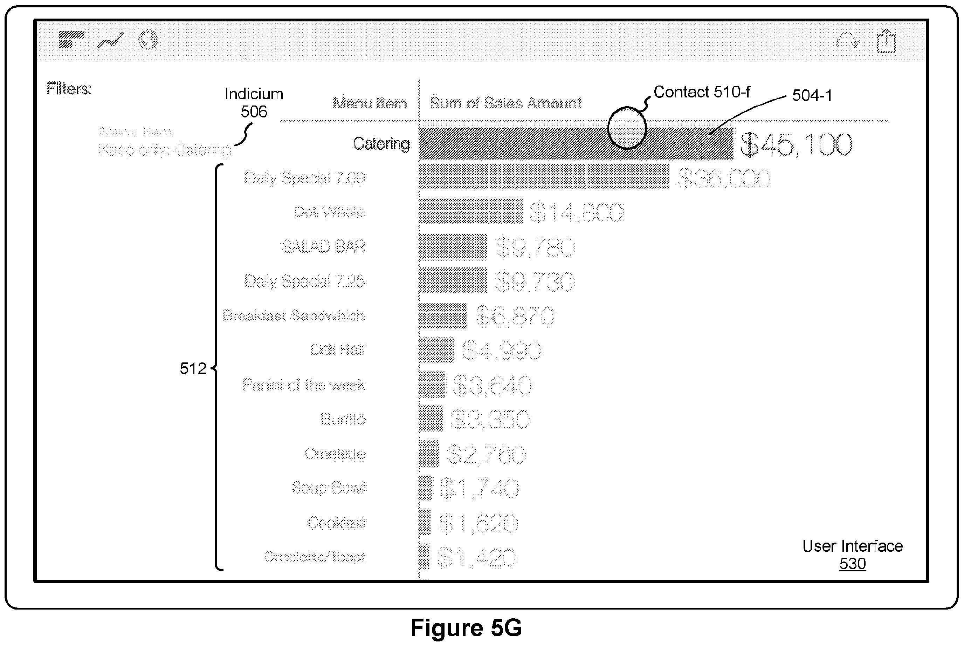

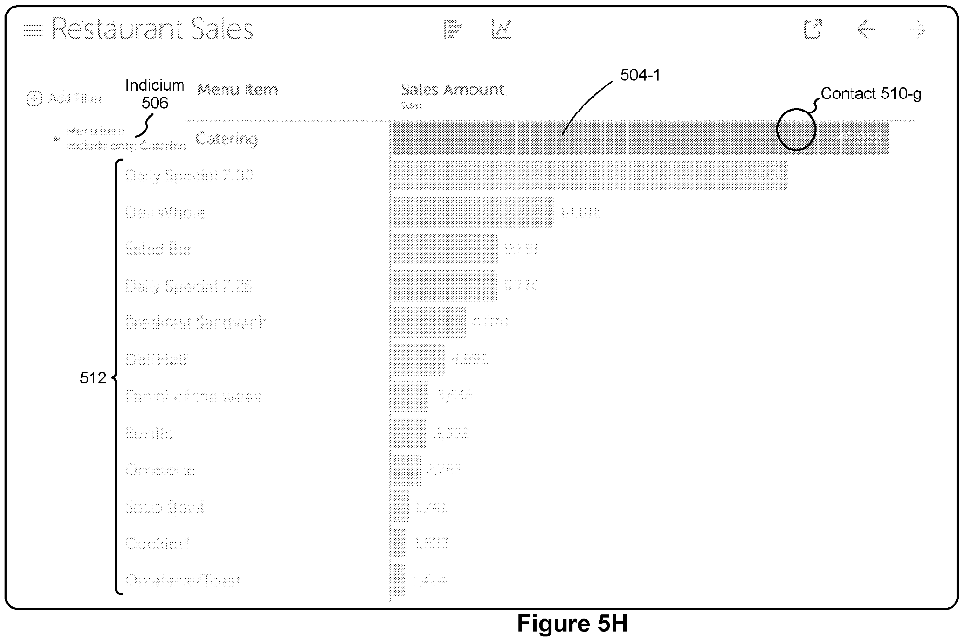

Figures 5G - 51 illustrate an implementation in which moving a visual mark to the right performs a filtering operation in which only the selected visual mark 504-1 is kept. Figure 5G shows a UI 530 including an indicium 506, which indicates that the category Catering 502-1 is the only category that will be kept. The visual marks for the other categories are shown dimmed, providing feedback to the user that they are being filtered out. In addition, the other category labels 512 are moving to the left. In the UI 530, the contact 510 is detected at a position 510-f on the visual mark 504-1. As the user moves the contact 510 to the right, the visual mark 504-1 does not move; instead, the other visual marks fade out and the other category labels 512 move to the left in concert with movement of a contact 510 via an animated transition. In Figure 5H, the user has continued to move the contact 510 to the right, which is now at a position 510-g. The visual mark 504-1 for the Catering category has not moved, but the visual marks for the other categories have faded further and the corresponding labels 512 has moved further to the left, in concert with the movement of the contact position 510. With a little more movement of the contact position, only the Catering mark 504-1 remains, as illustrated in Figure 51.

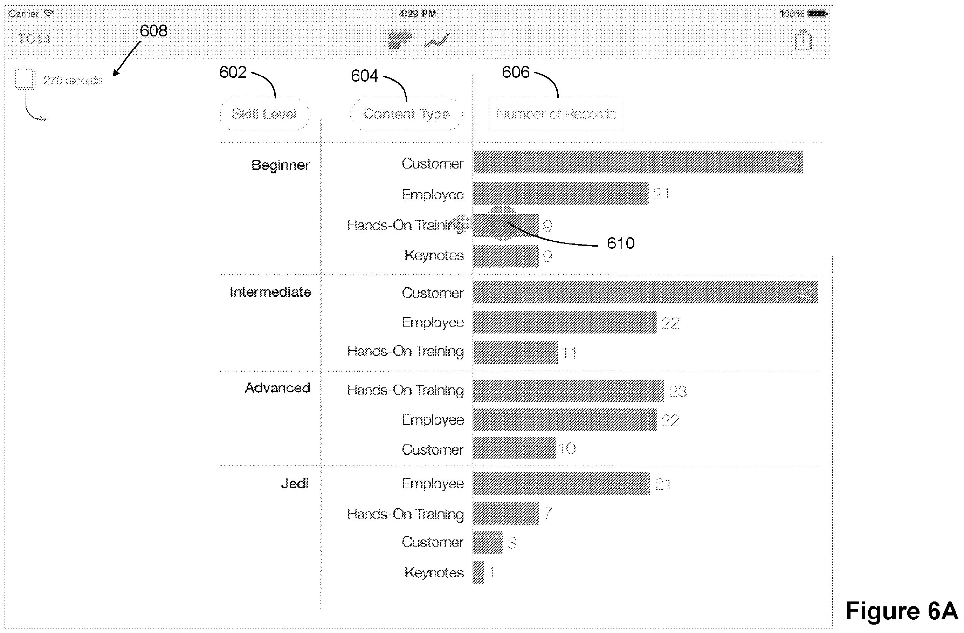

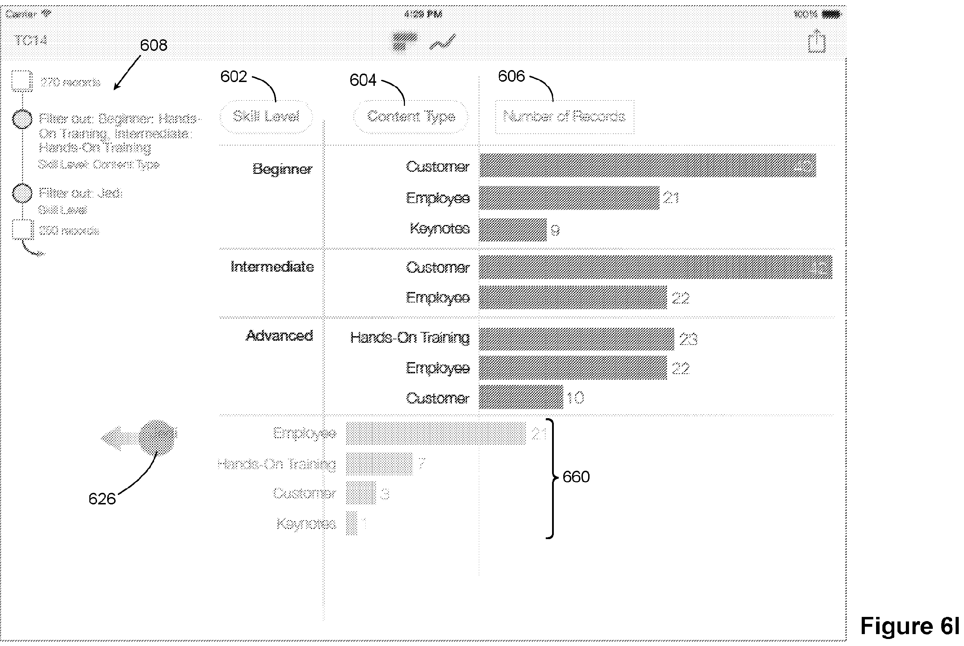

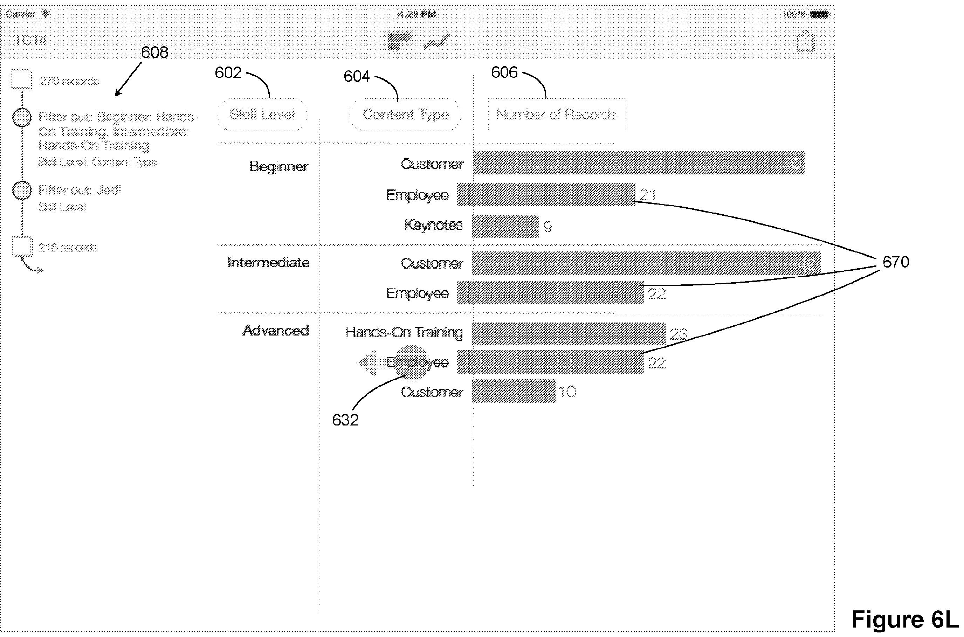

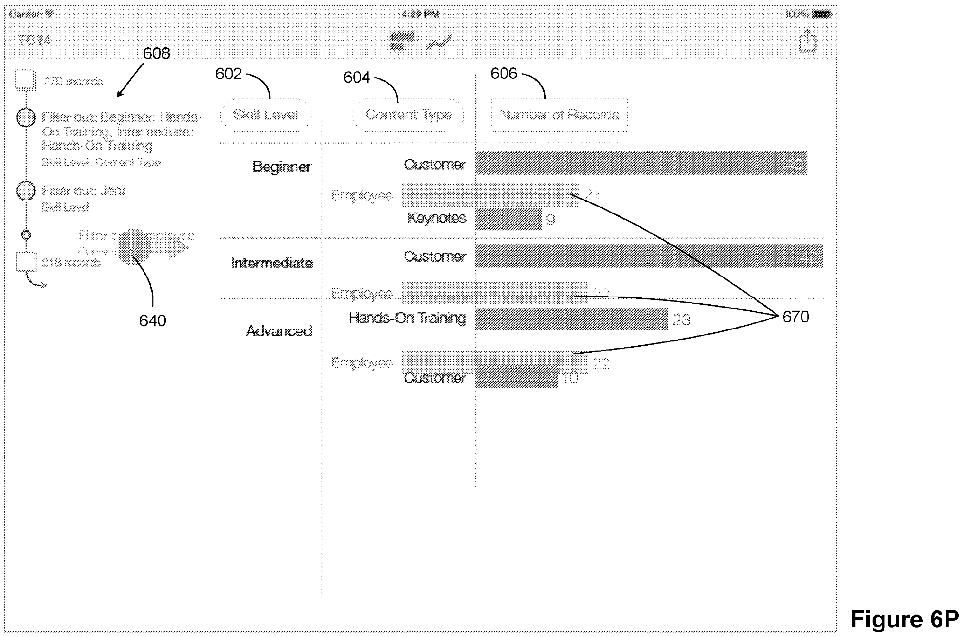

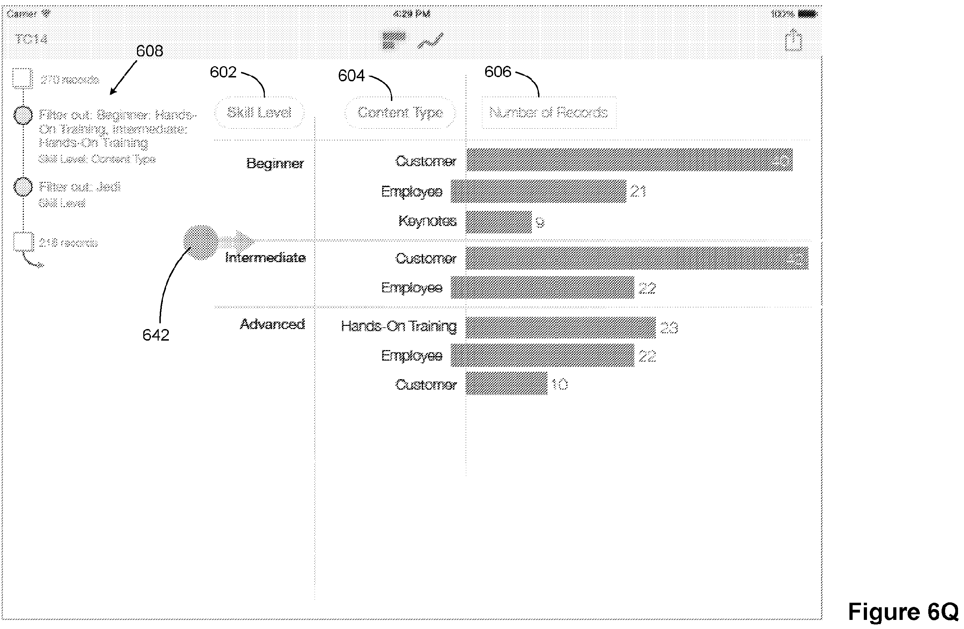

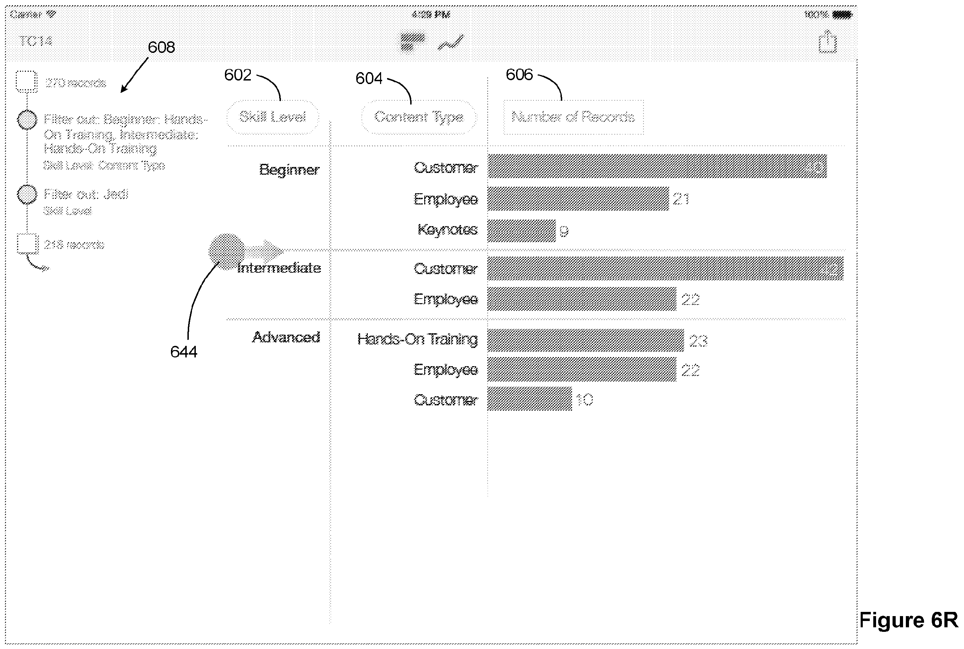

Figures 6A - 6S illustrate a graphical user interface that provides for interactive hierarchical filtering, in accordance with some implementations. Here, the data set is for a user conference with many individual sessions for people to attend. The session has both a skill level 602 and a content type 604. In the data visualization in Figure 6A, the visual marks (the bars) represent the number of records 606 for each skill level / content type combination. In the upper left corner is an indicium 608 of what records are being displayed. Initially, there are 270 records, and none of the records are being filtered out. The user can filter out data in the data visualization, and what is filtered depends on what is selected.

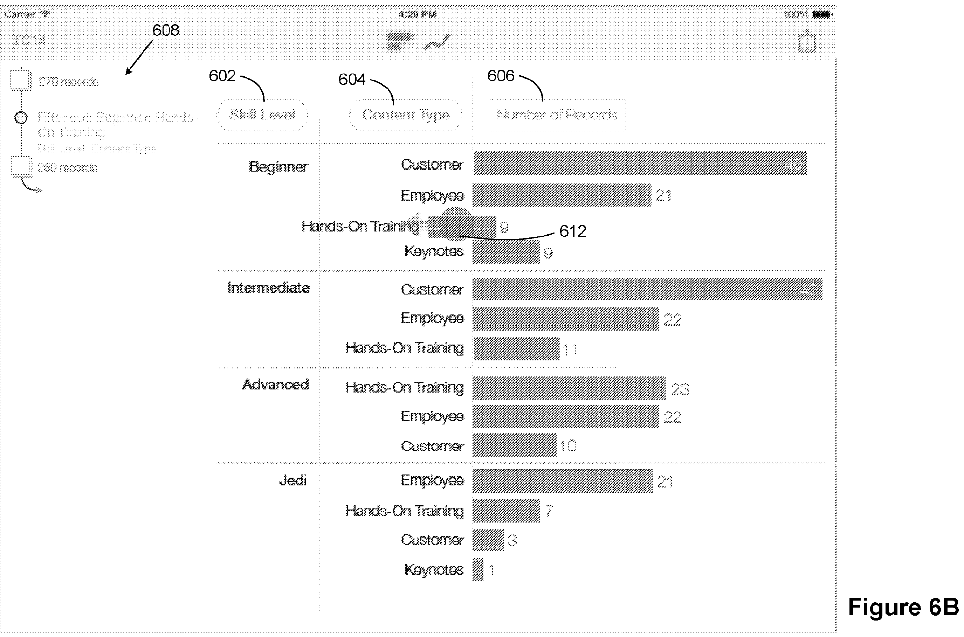

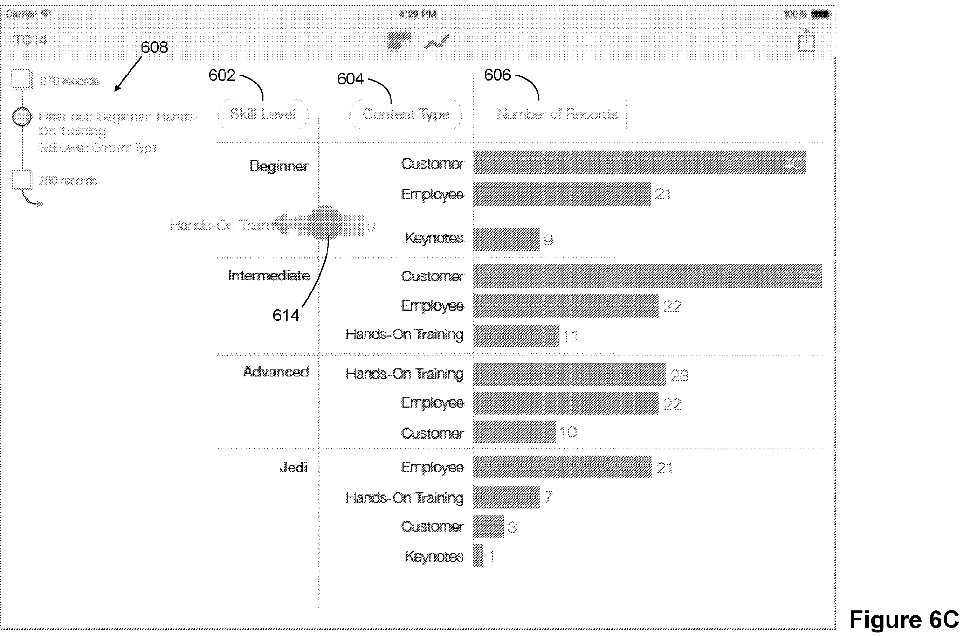

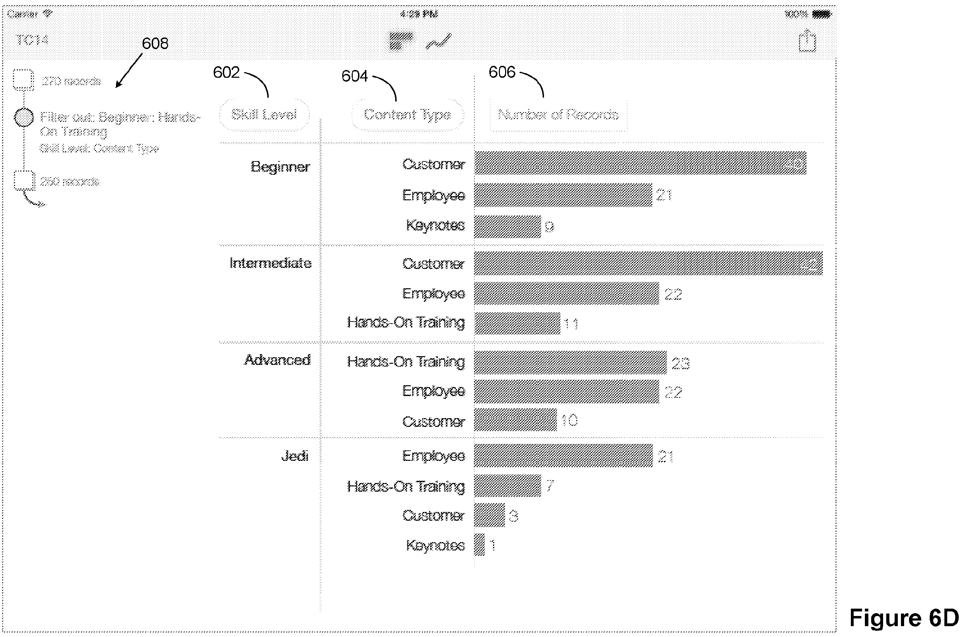

In Figure 6A, the interface contact point 610 is on a specific bar, so moving the contact point to the left proceeds to remove just the one selected bar, which represents the hands on training sessions for beginners. As illustrated in Figures 6B and 6C as the contact point reaches position 61 and then 614. In some implementations, the bar that is being removed begins to fade as it is removed, as illustrated in Figure 6C. The indicium 608 is updated to provide the user feedback about the current option. Here, the indicium 608 indicates that the beginner hands on training sessions will be filtered out. In some implementations, the indicium for the filtering condition remains dimmed until the action is complete. Figure 6D illustrates completion of the action to filter out beginner hands on training sessions.

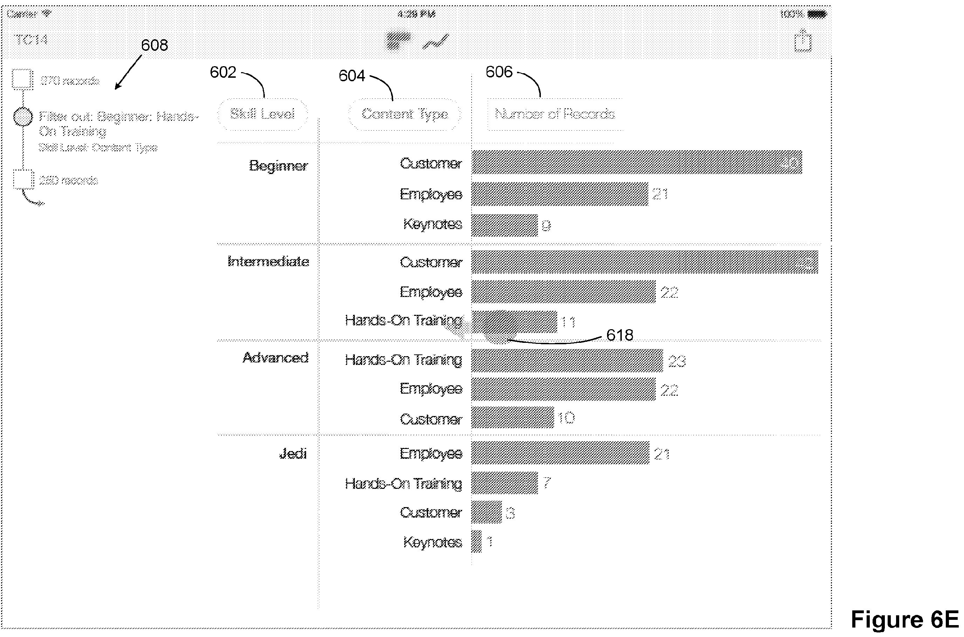

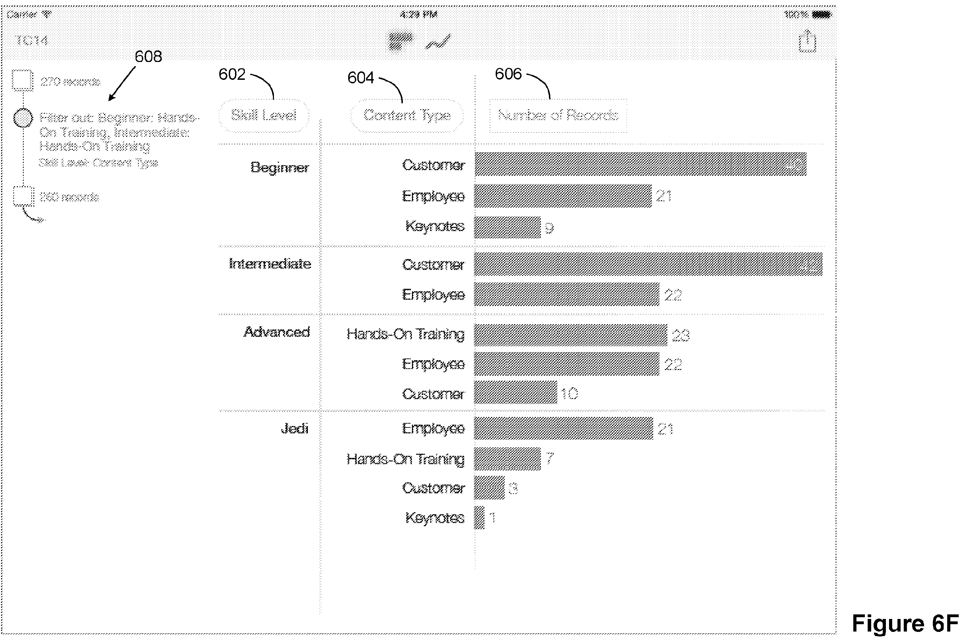

In Figure 6E, the user places the contact position 618 on the hands on training sessions for intermediate users and begins to move the contact position to the left. The indicium 608 is updated to indicate that this additional set of sessions is filtered out, as illustrated in Figure 6F.

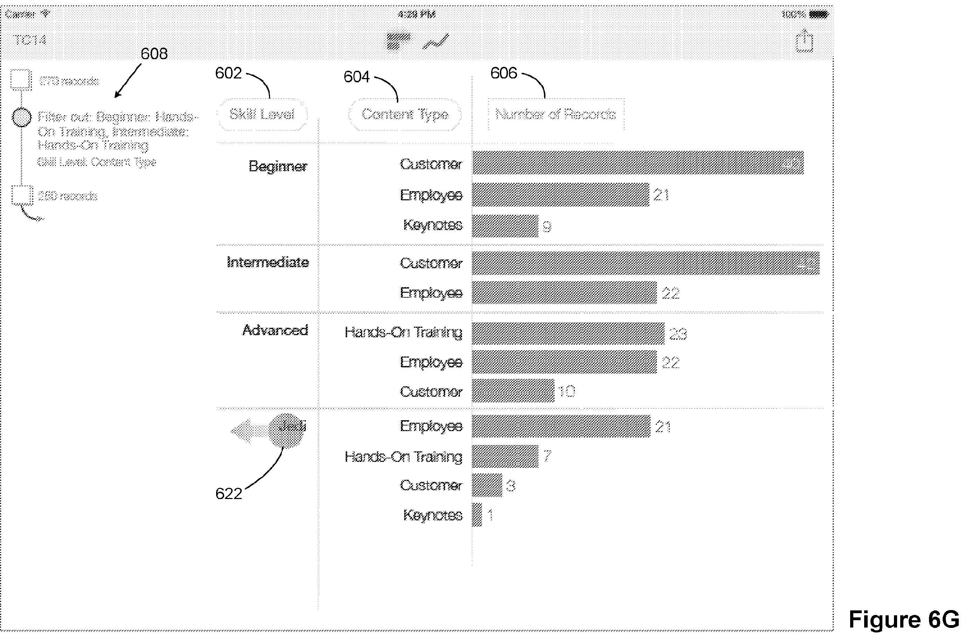

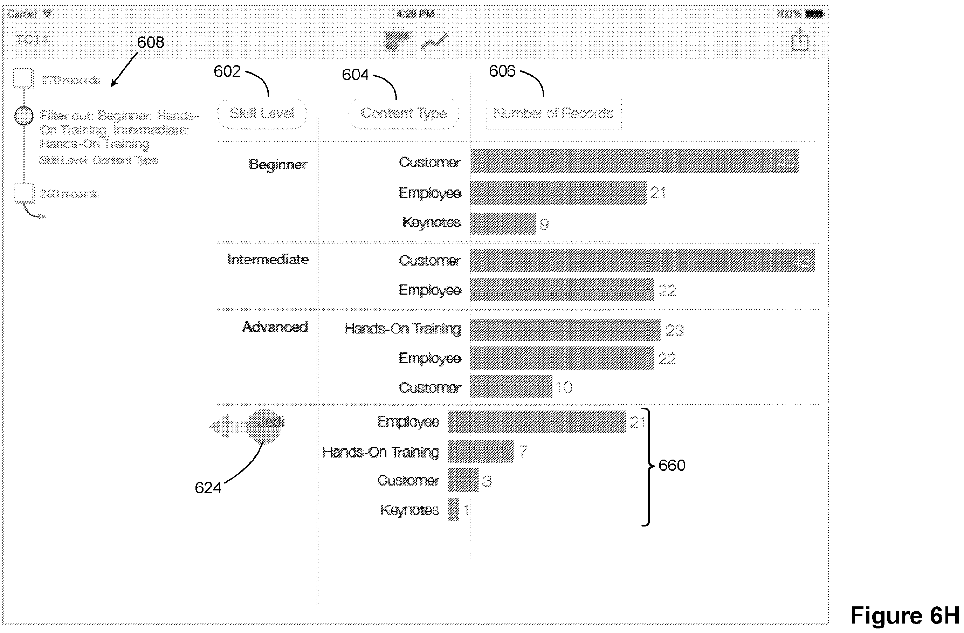

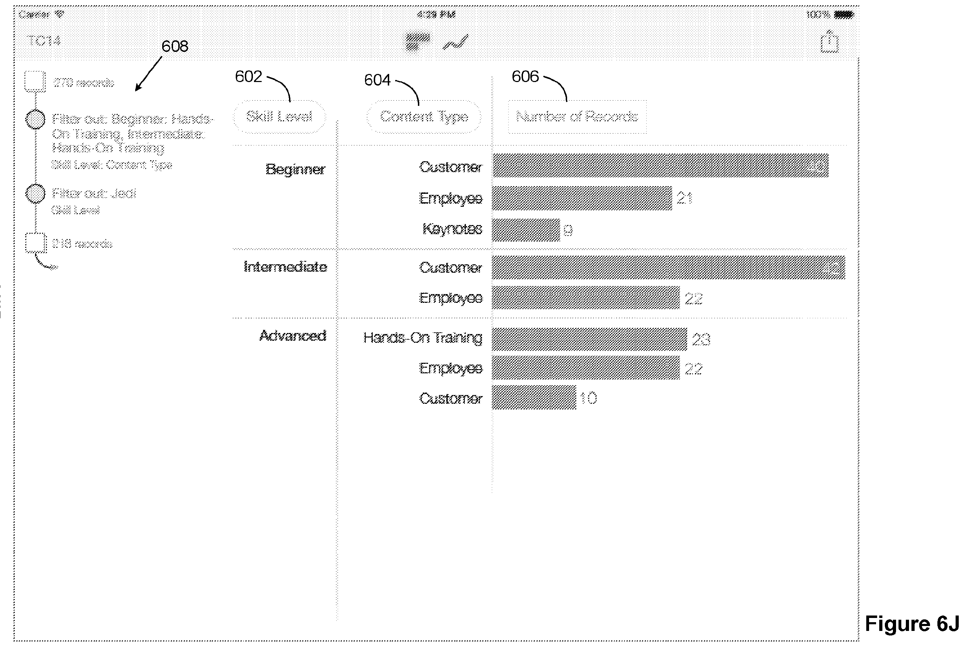

In Figure 6G, the user places the contact position 622 on the Jedi skill level and begins to move the contact to the left. Because the user has selected a skill level 602, moving the contact position 624 results in moving out all of the sessions 660 for this skill level, regardless of the content type, as illustrated in Figure 6H. As the contact point 626 moves further, the set 660 of sessions continue to move in concert, and in some implementations the visual marks for the set 660 are dimmed, as illustrated in Figure 61. As illustrated in Figures 61 and 6J, the indicium 608 updates to show the additional filter. In some implementations, filters are displayed differently within the indicium depending on whether the filter applies to a single visual mark or an entire dimension.

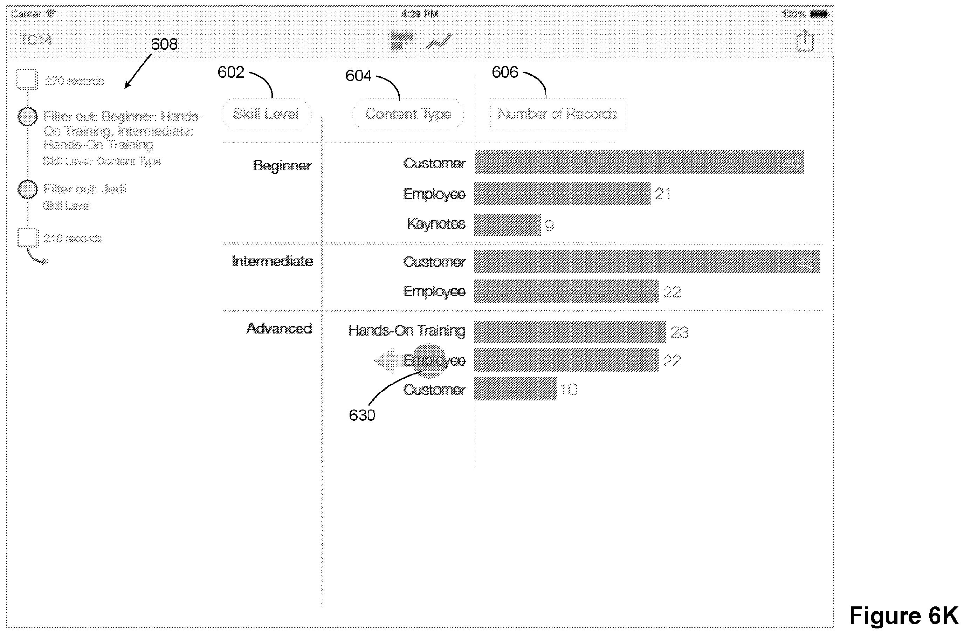

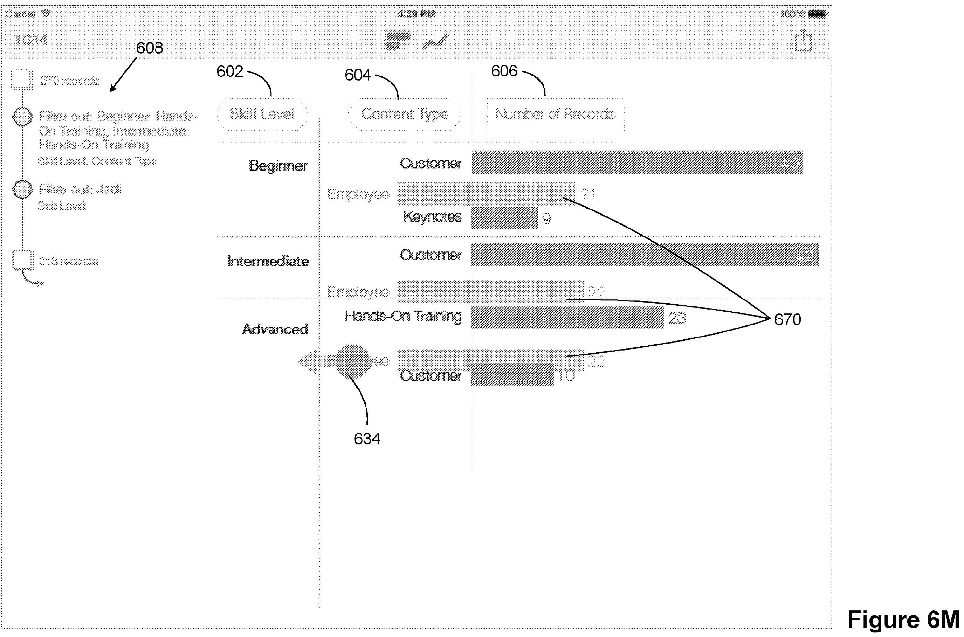

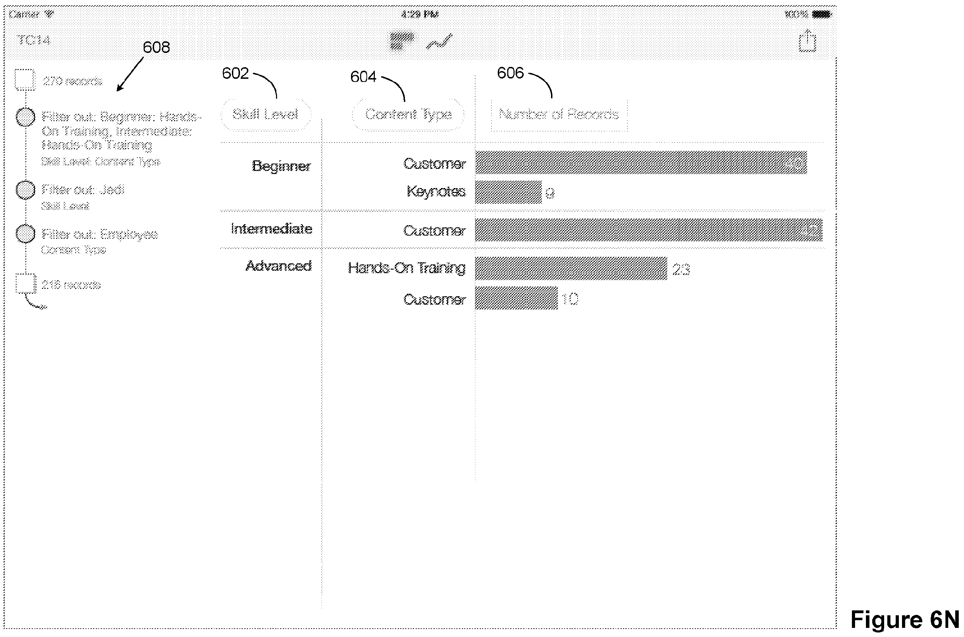

In Figure 6K, the user places the contact position 630 on the "employee" contact type within the advanced skill level. Because the user has selected a content type rather than an individual data mark, as the user moves the contact position 632 to the left, all three of the data marks 670 are moved in concert with the movement of the contact position. That is the user is filtering out the "employee" contact type, regardless of skill level. As the contact position 634 moves to the left, all three of the visual marks 670 for this contact type are moved in concert to be filtered out, as illustrated in Figure 6M. As illustrated in Figure 6N, the indicium 608 is updated to show that this content type is being filtered out.

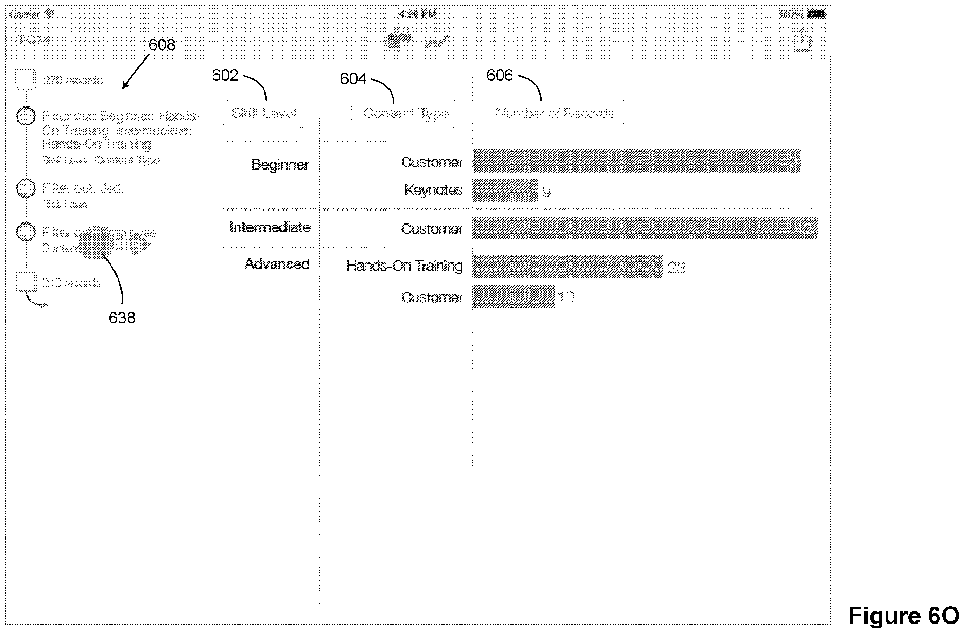

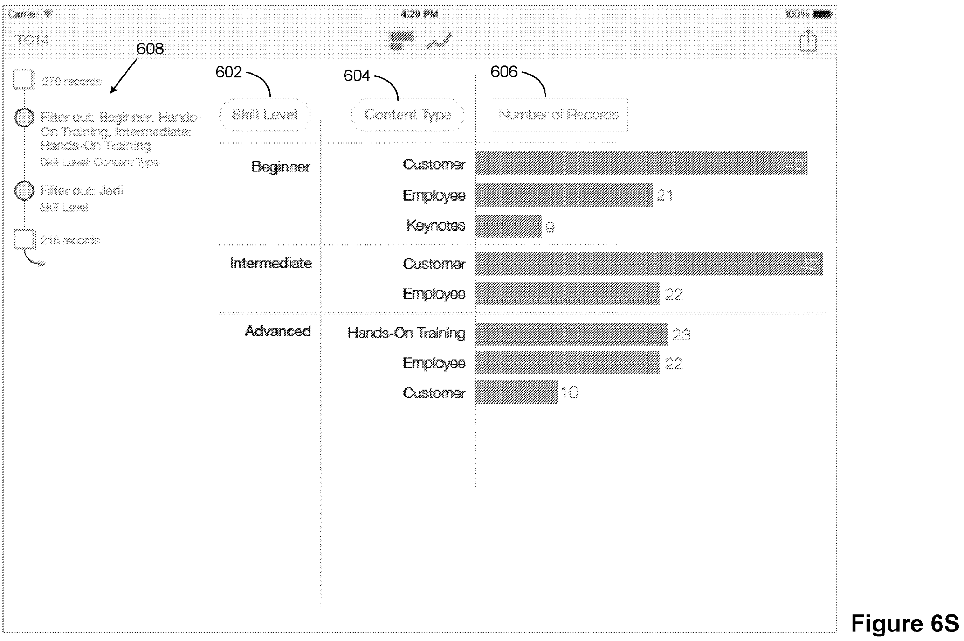

Figures 6O - 6S illustrate reversing the process, bringing back the sessions for the "employee" content type. The user selects 638 the "employee" content type from the indicium 608, and moves it to the right, through positions 640, 642, and 644, until the marks for these sessions are back in the data visualization, as shown in Figure 6S.

Although Figures 6A - 6S depict a scenario where two dimensions are displayed (Skill Level and Content Type), the same methodology applies when three of more dimensions are displayed. When a specific data mark is moved, just that one mark is filtered out. For the other dimensions, what is filtered out depends on the dimension selected.

When the dimensions are independent of each other, the process is as described. In some instances, there are hierarchical dependencies between the dimensions. In some implementations, when there is a hierarchical dependency between the selected dimensions, filtering out a dependent value filters out the dependent value only within its hierarchy.

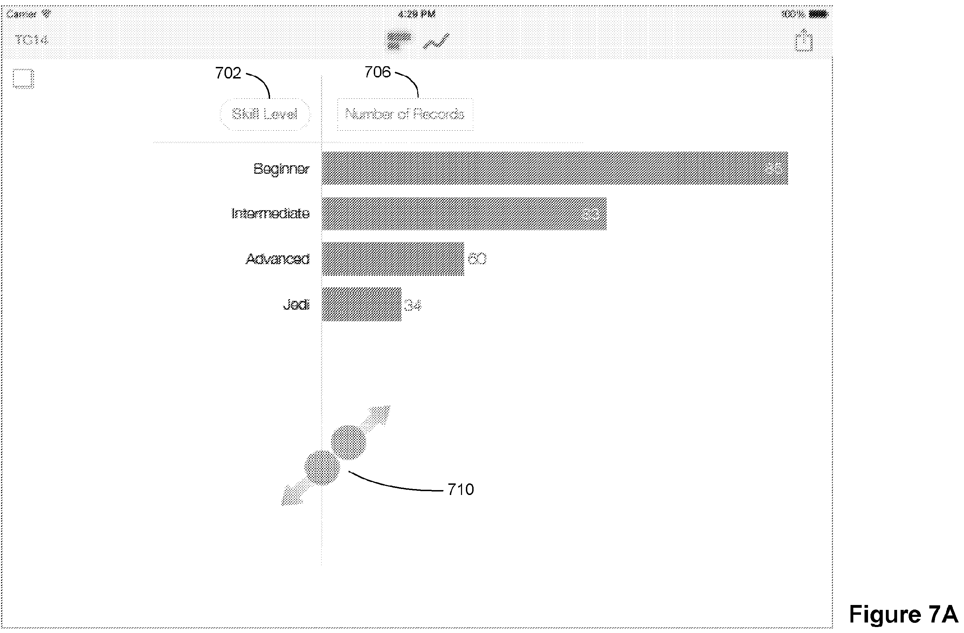

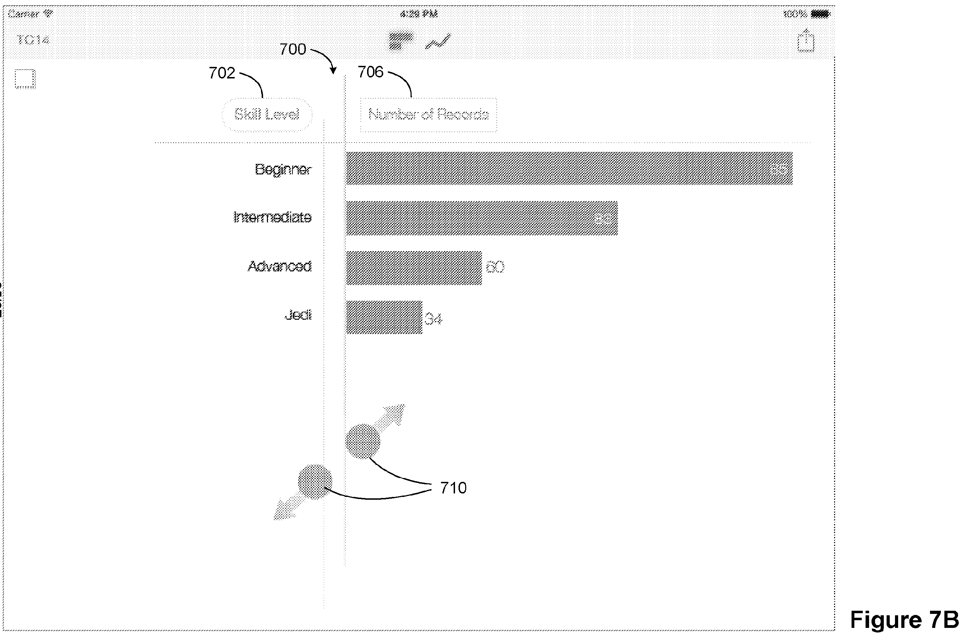

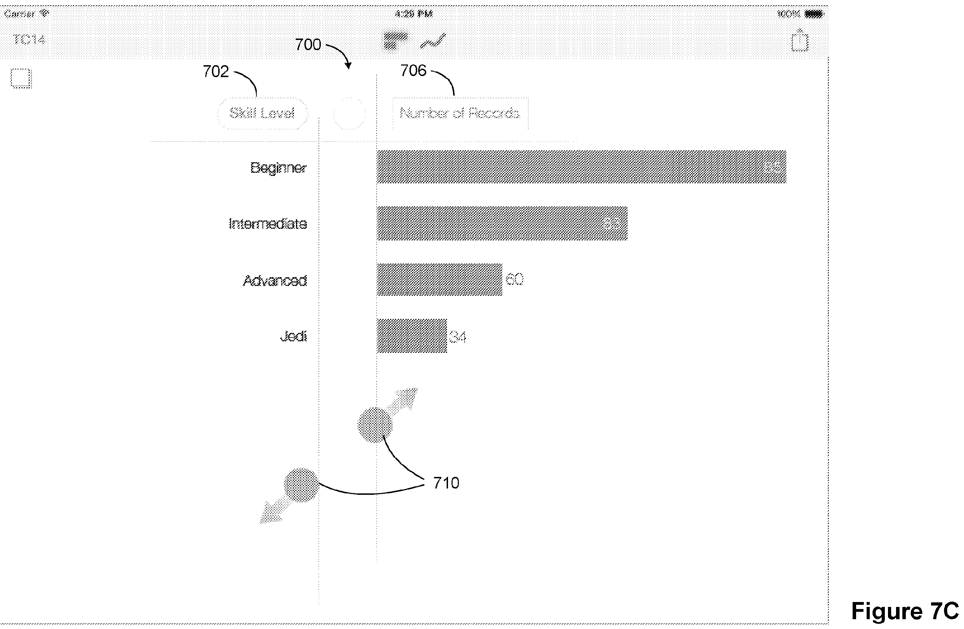

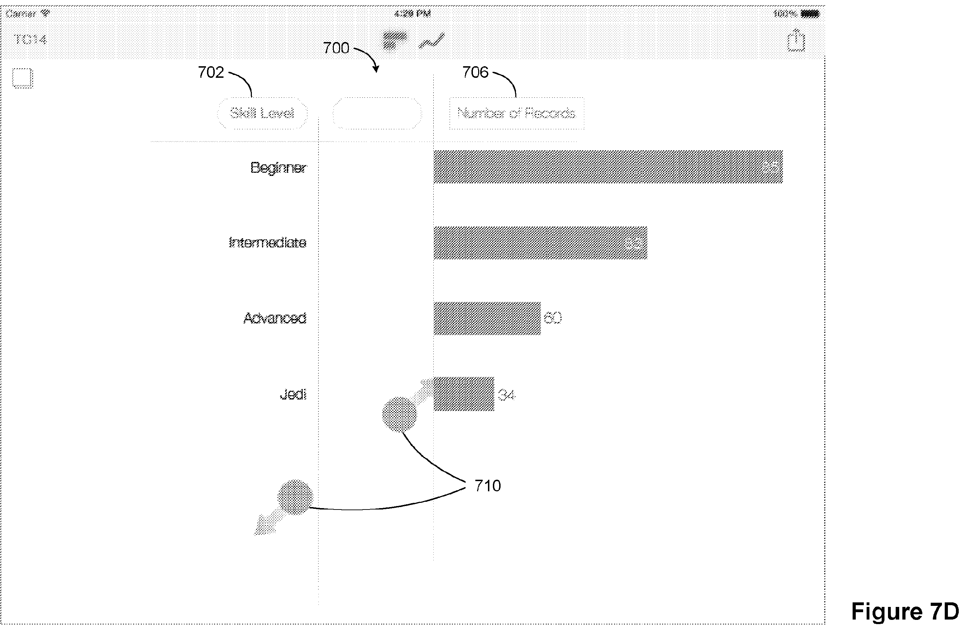

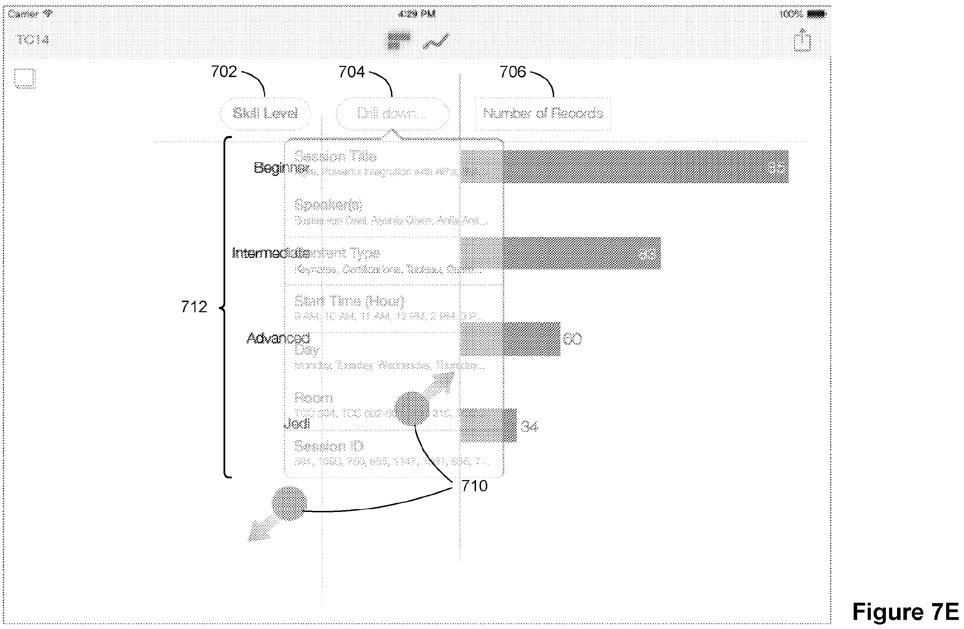

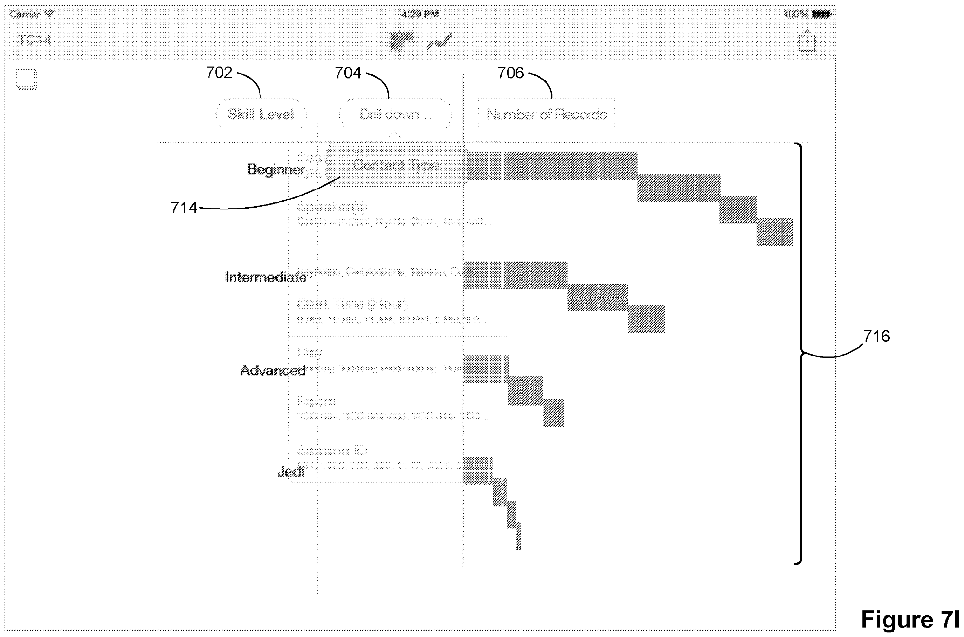

Figures 7A - 7N illustrate a process of adding an additional dimension to a data visualization based on an interaction gesture with an existing data visualization, in accordance with some implementations. This sequence of illustrations uses the same data set illustrated previously in Figures 6A - 6S. Figure 7A provides a user interface showing a bar chart data visualization in which each bar represents the number of records 706 corresponding to each skill level 702. The user initiates an user interface gesture with two contact points 710 moving apart. In some implementations this is referred to as an "unpinch." Figures 7B - 7D illustrate that as the contact points 710 move apart, a new column 700 opens up. In some implementations, when the new column 700 created in this way is to the left of the visual marks (e.g., to the left of the bars in the bar chart), the data visualization application 422 identifies the dimensions in the data set and displays the possible dimensions 712 in an initially dimmed display, as illustrated in Figure 7E. At the top of the new column 700, some implementations temporarily display the label "Drill Down" 704, indicating that the user action is triggering a drill down into the data set.

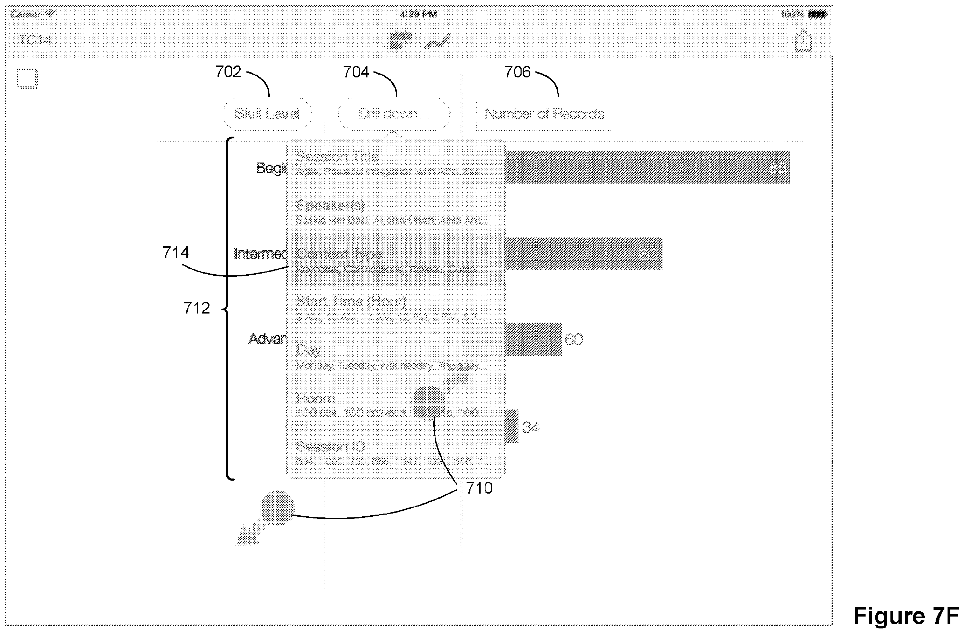

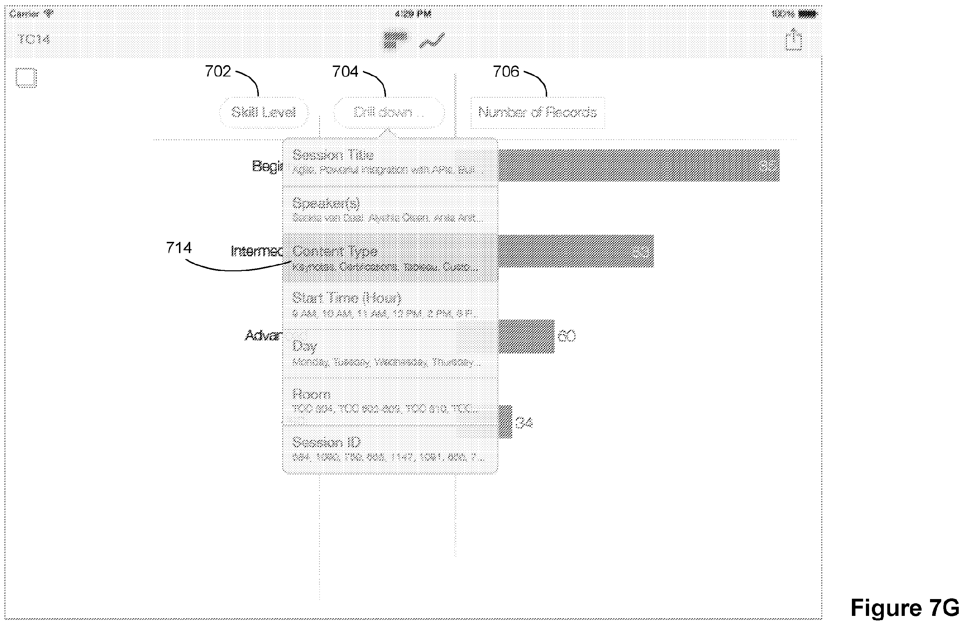

One of the possible dimensions 712 is selected and highlighted, as illustrated by the "Content Type" dimension 714 in Figure 7F. In some implementations, the selection is based on previous selection by the user or a group of user, or other heuristics. In some implementations, the selection is random or pseudo random. In some implementations, the selection is based on an alphabetical listing of the field names. In some implementations, the user can select the dimension from the displayed list. Figure 7G indicates that the contact points 710 have been released.

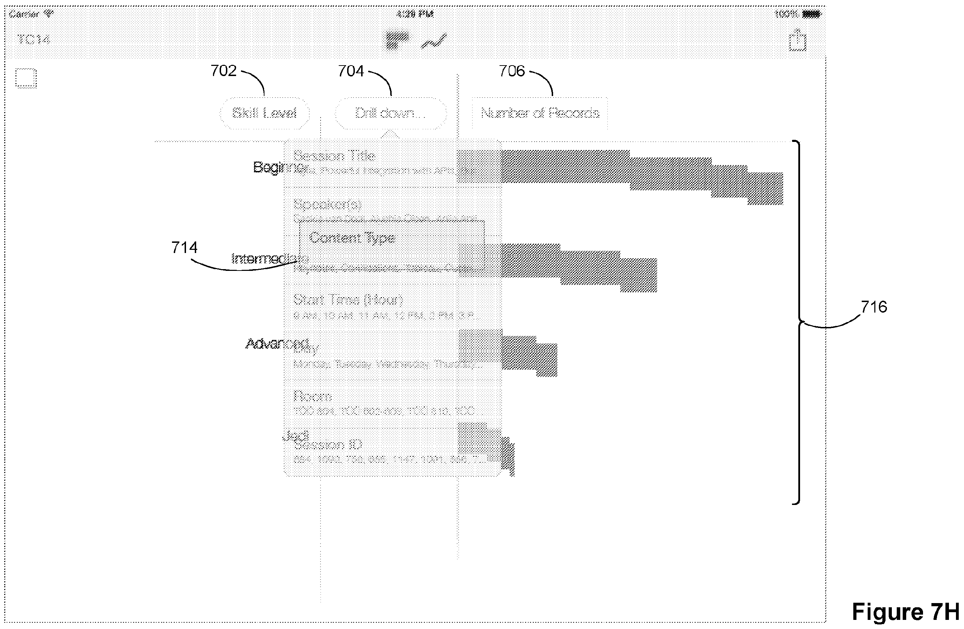

Figure 7H indicates that the "Content Type" dimension 714 will be used for the drill down, and an animation begins to move this field upward to form the column header. In addition, the bars from the bar chart being to split based on this additional dimension, as illustrated in the data visualization region 716 of Figure 7H. For example, the first bar for beginner sessions is split into four separate bars based on the content type. Figure 71 continues to illustrate this transition, with the Content Type dimension 714 continuing to move to the header, and the splitting of the bars continuing vertically. The former list 712 of dimensions fades out.

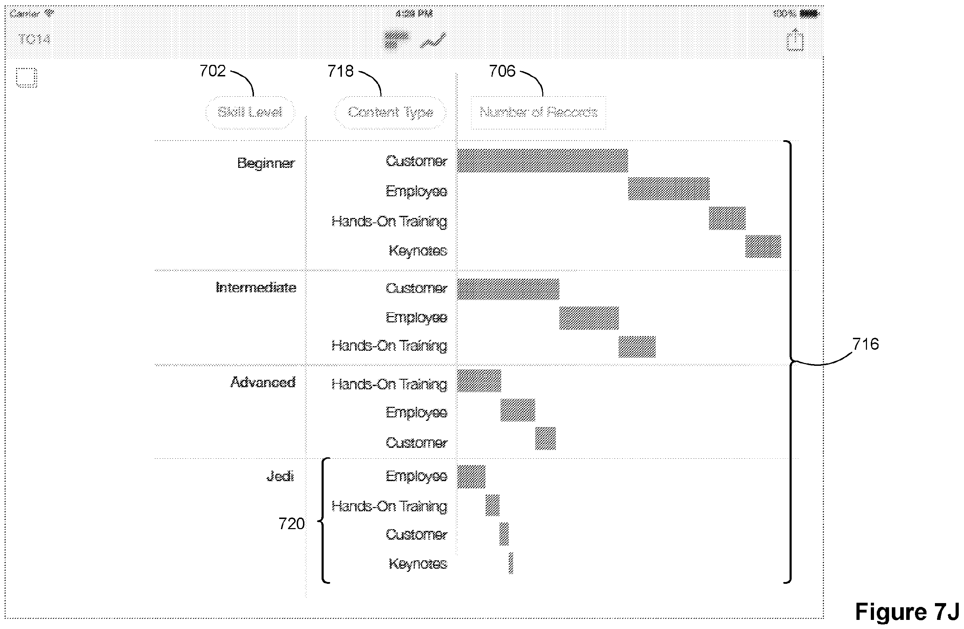

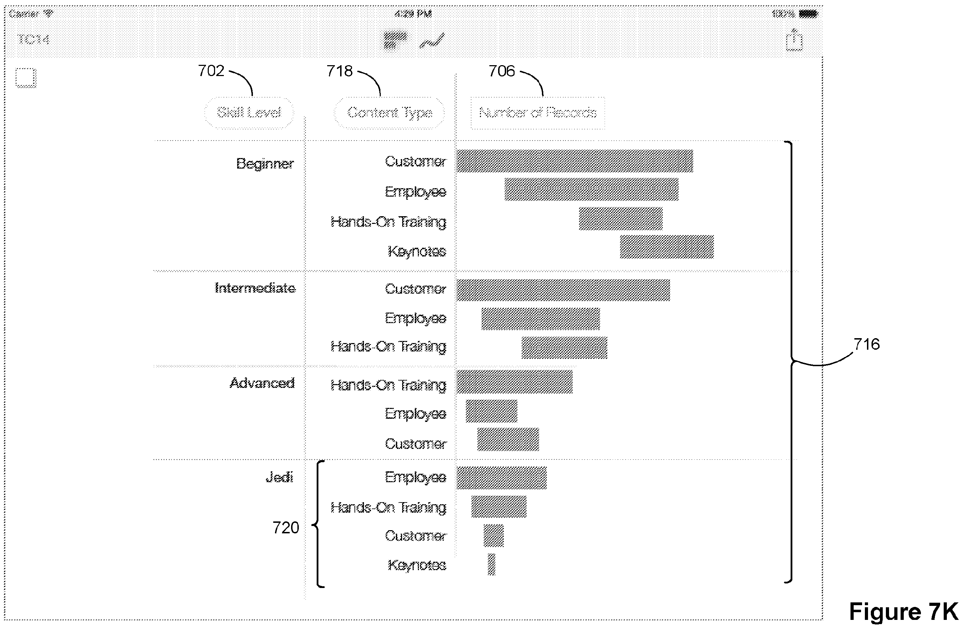

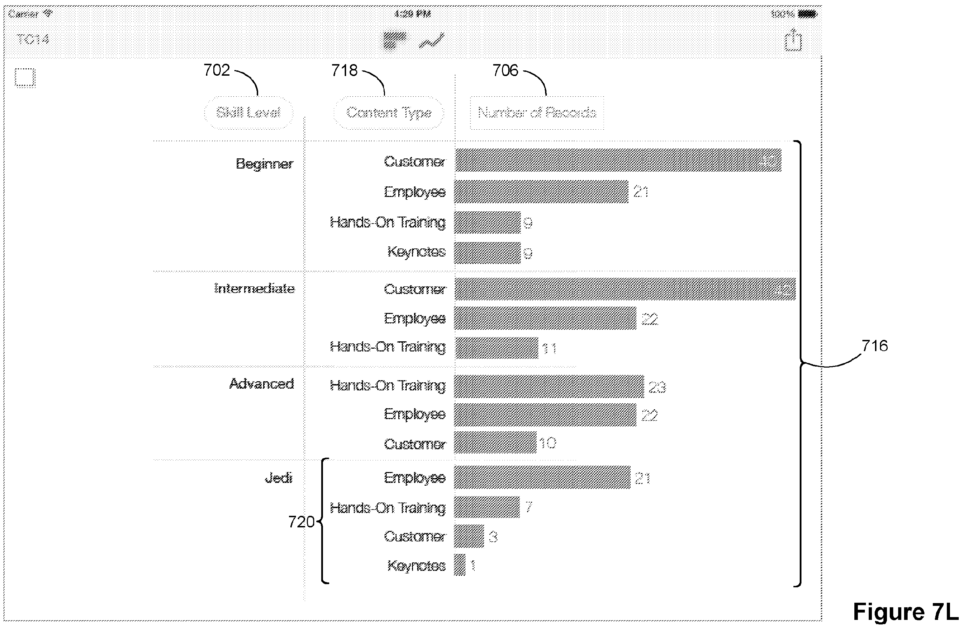

As Figure 7J illustrates, when the split bars have moved enough vertically, the "content type" labels 720 for each bar are displayed in the new column 700. In addition, the "Content Type" label 718 is now displayed in the header of the new column 700. Figures 7K and 7L illustrate the continued animation of the bars in the data visualization region 716. In this case, the bars move horizontally to the left so that they will be in a typical position for a bar chart with two dimension levels ("skill level" 702 and "content type" 718). The smooth animation assists the user in understanding the data, including the splitting of individual bars in one data visualization to multiple sub-bars in a second data visualization.

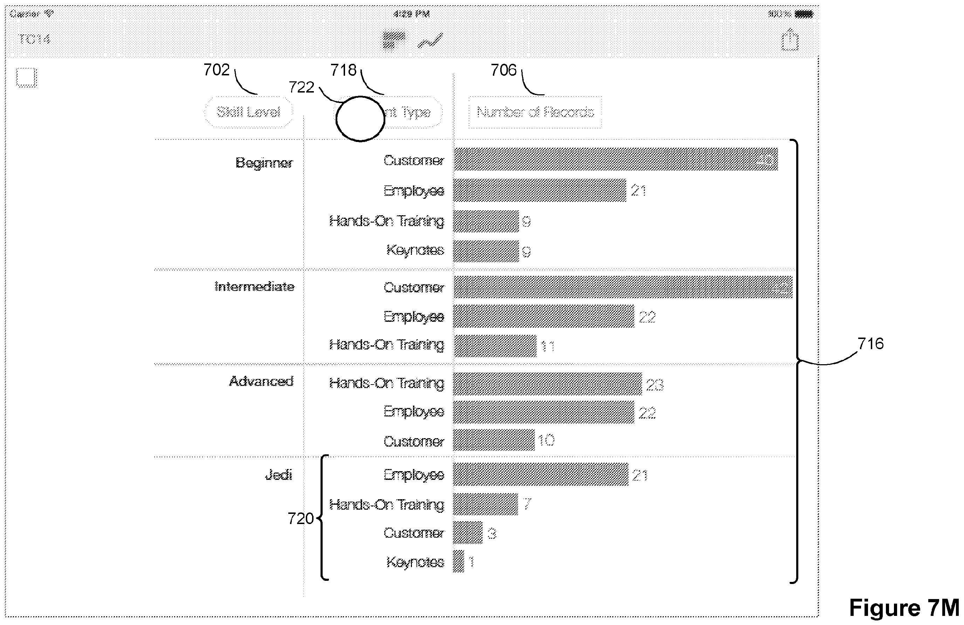

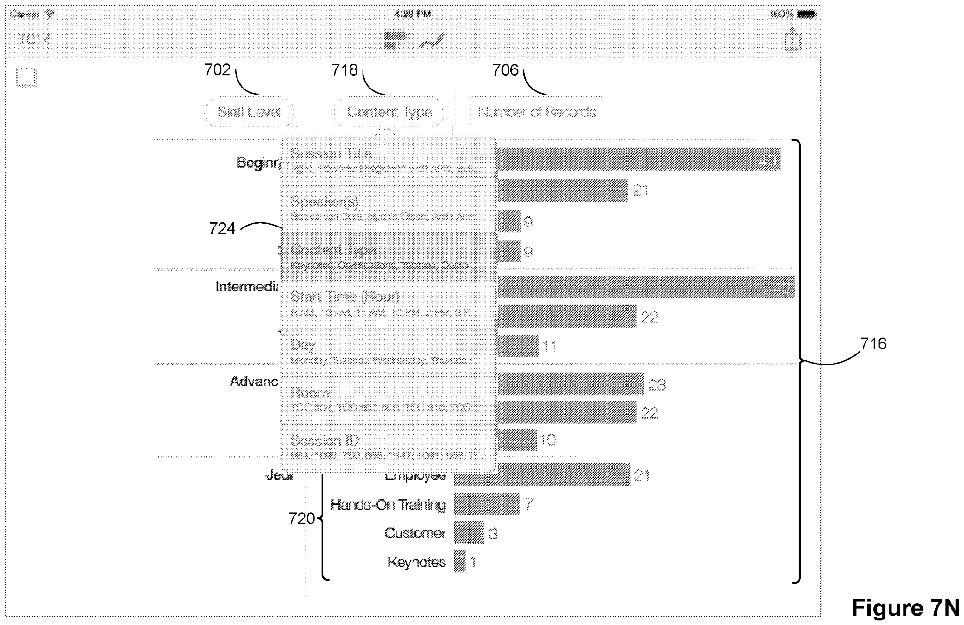

Figure 7M illustrates a contact 722 being detected at a location over the dimension label for "Content Type" dimension 718. Figure 7N shows a menu 724 of dimension options being displayed as a result of the contact 722 being detected. The menu 724 includes various dimension options that, if selected, will be displayed in place of the "Content Type" dimension 718. For example, if a contact is detected at a location over dimension option "Session ID" then, in response, content type dimension 718 will be replaced by the "Session ID" dimension. In accordance with some implementations, menu 724 in Figure 7N displays the dimension label and a plurality of dimension categories for each dimension option.

In some implementations, the column header "content type" 718 can be switched to another dimension. In some implementations, this can be achieved by doing a horizontal scroll at a contact point on the content type header.

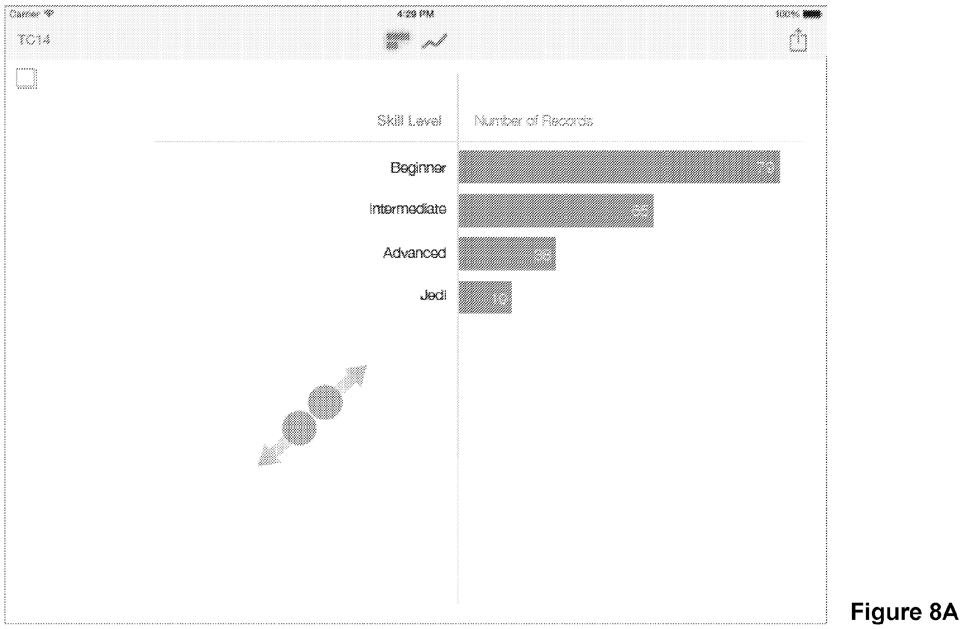

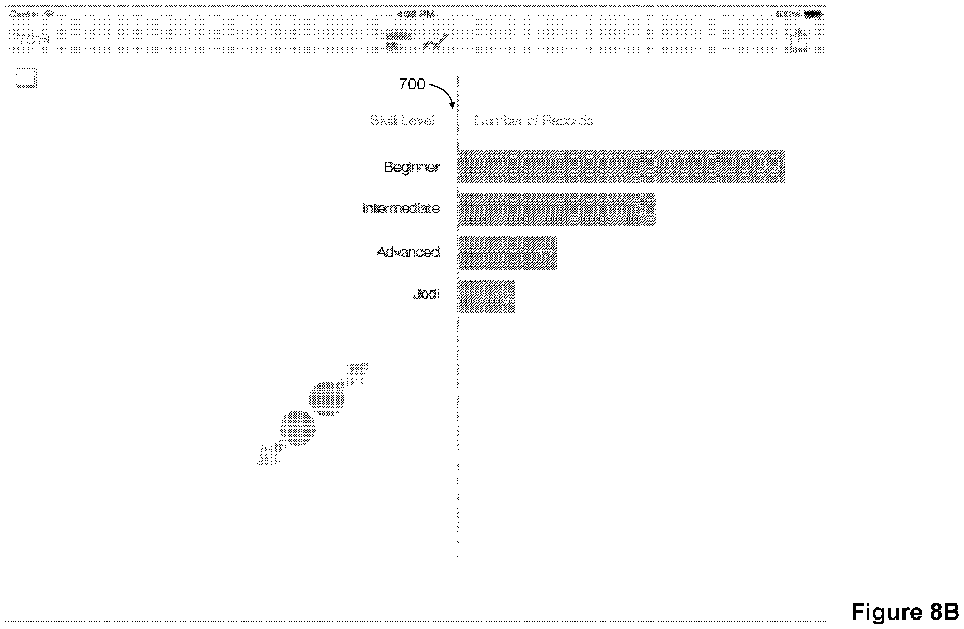

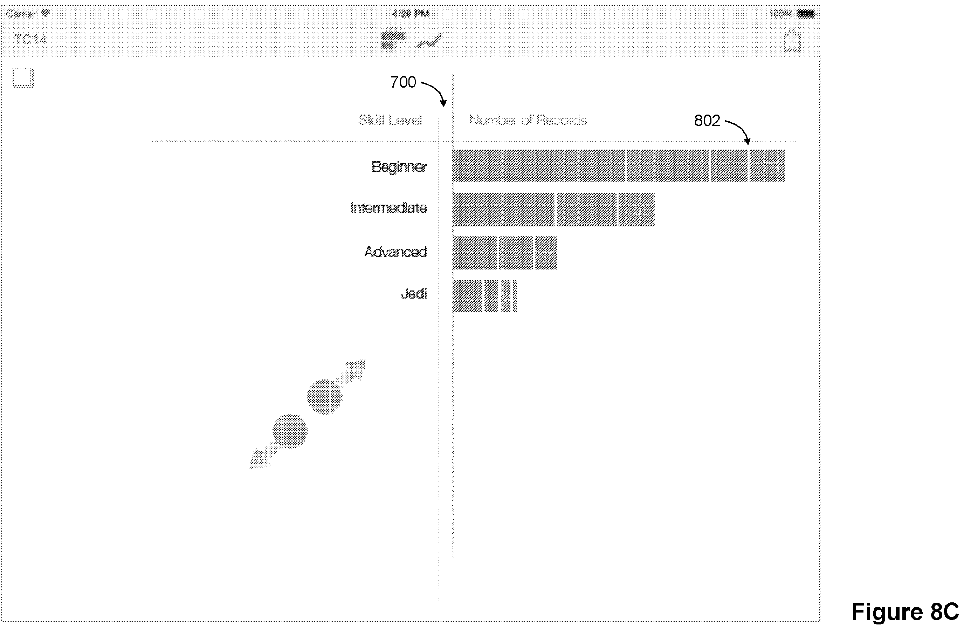

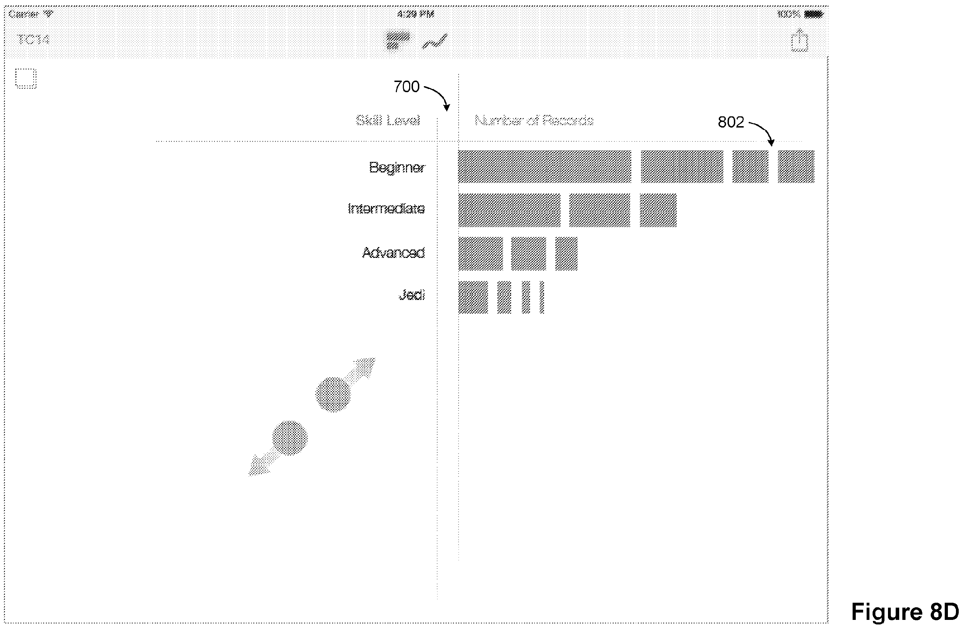

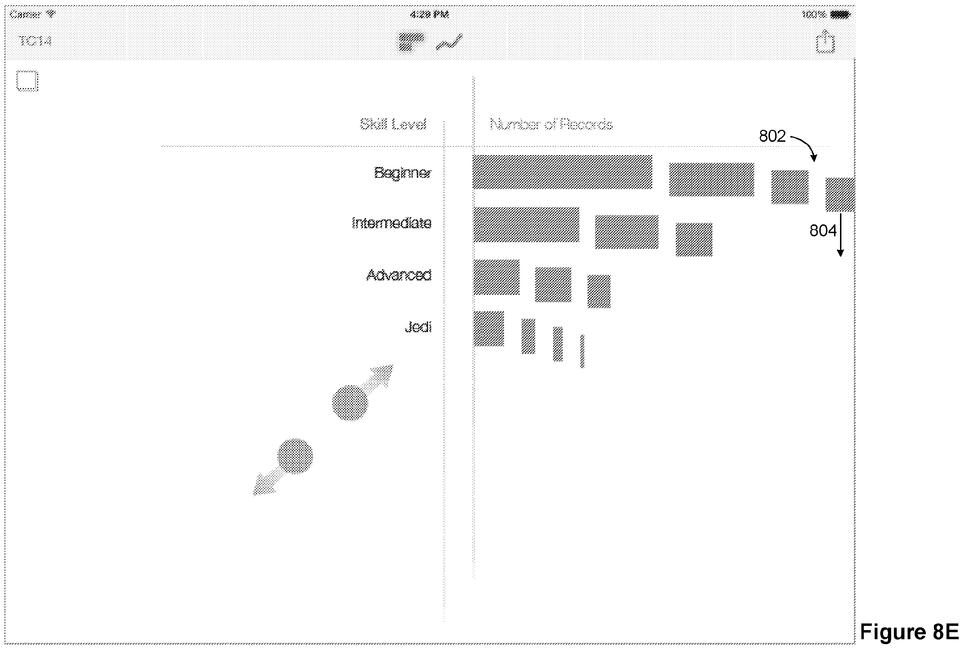

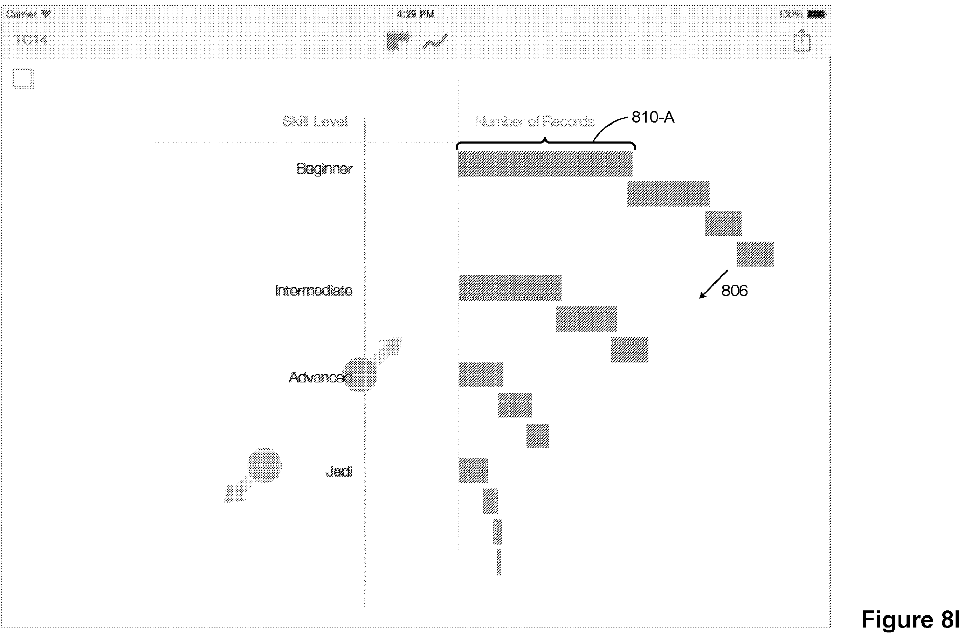

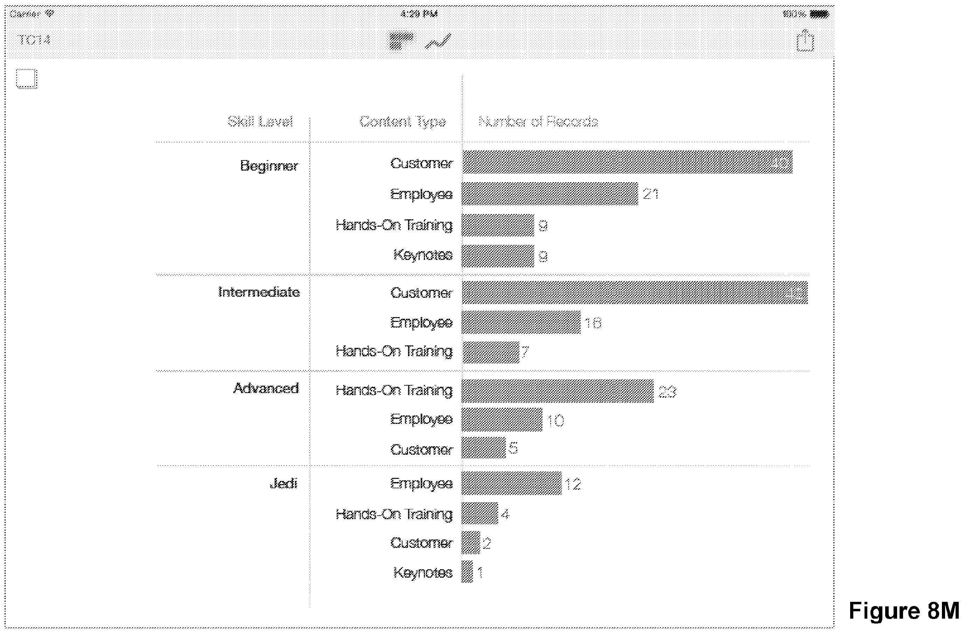

Figures 8A - 8M illustrate an alternative animated transition when an additional dimension is added to an existing data visualization, in accordance with some implementations. As in the sequence of Figures 7A - 7L, the process begins when a user moves two contact points away from each other in a region where dimensions are displayed (e.g., the dimension "Skill Level"). This opens up a new column 700 as before, but the horizontal bars initially split into distinct bars horizontally, leaving gaps, such as the gap 802 between the third and four splits of the top bar. As the contact points move further apart, the gaps grow wider, as illustrated by the gap 802 in Figure 8D. At a certain point in the animation, the bars begin to move vertically downward 804 as well, as illustrated in Figure 8E. In some implementations, the vertical motion occurs only after the horizontal splitting is done, but in other implementations, horizontal and vertical motion occur simultaneously.

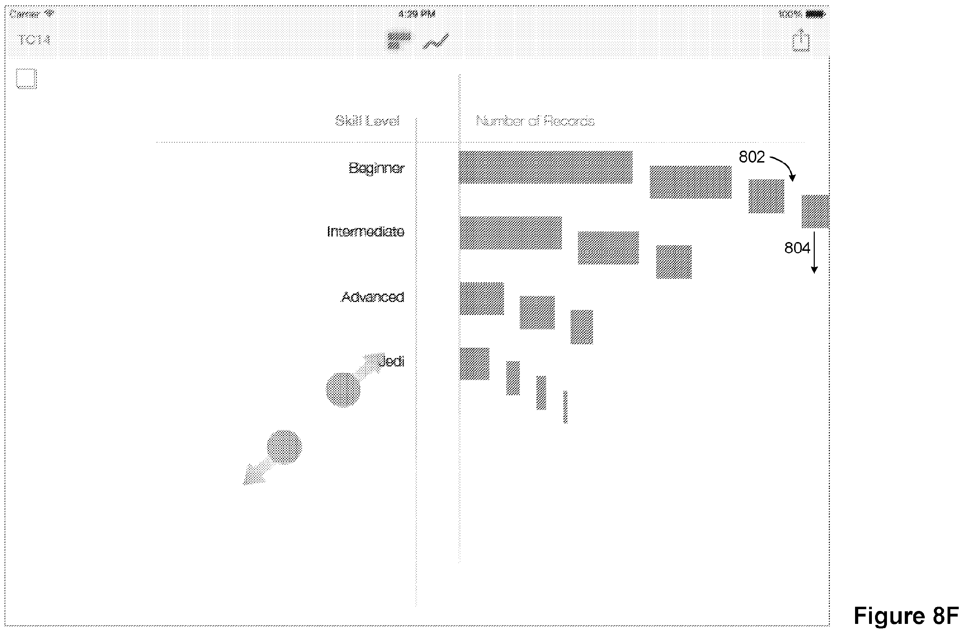

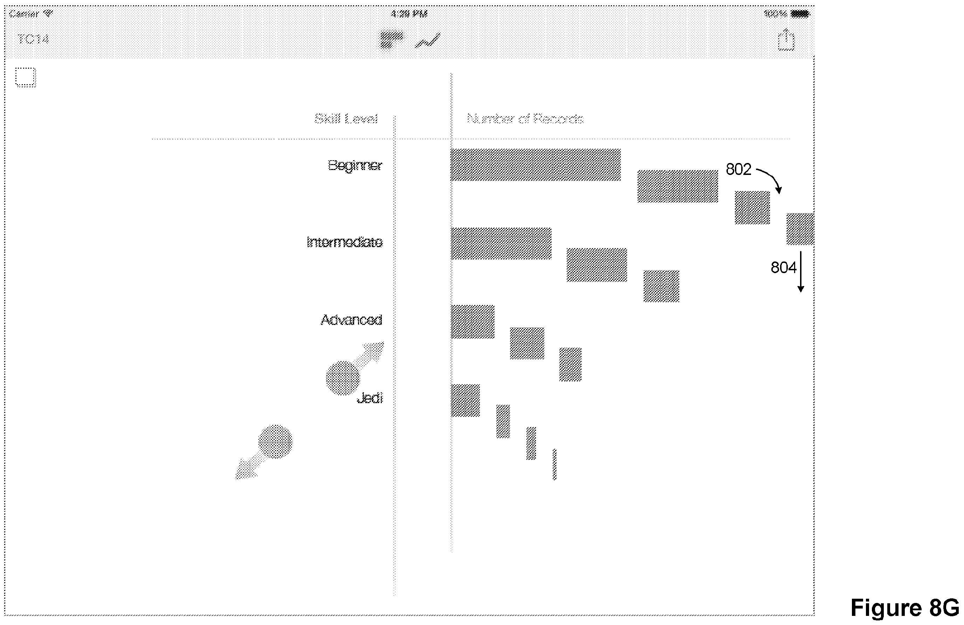

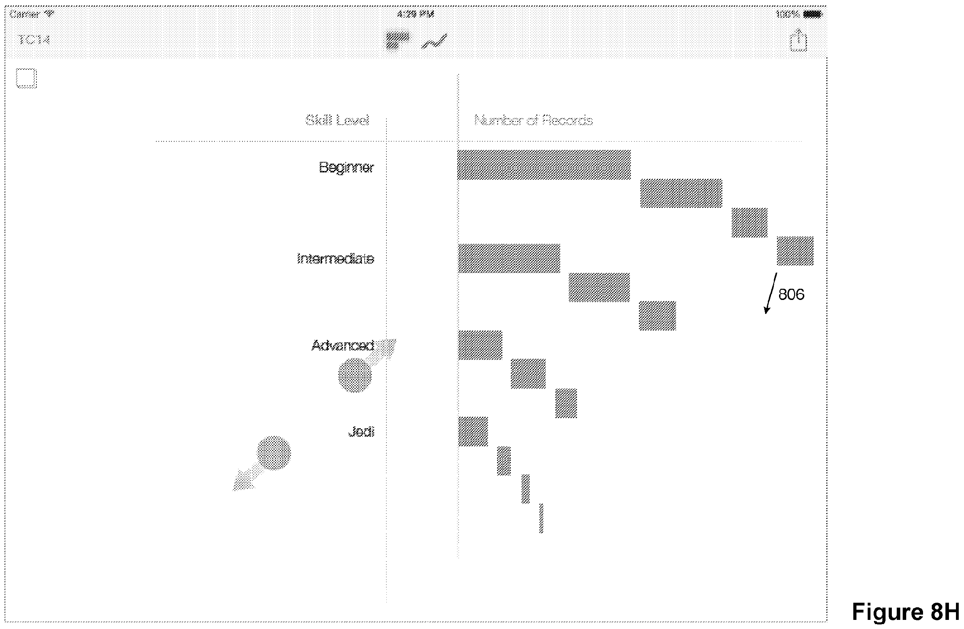

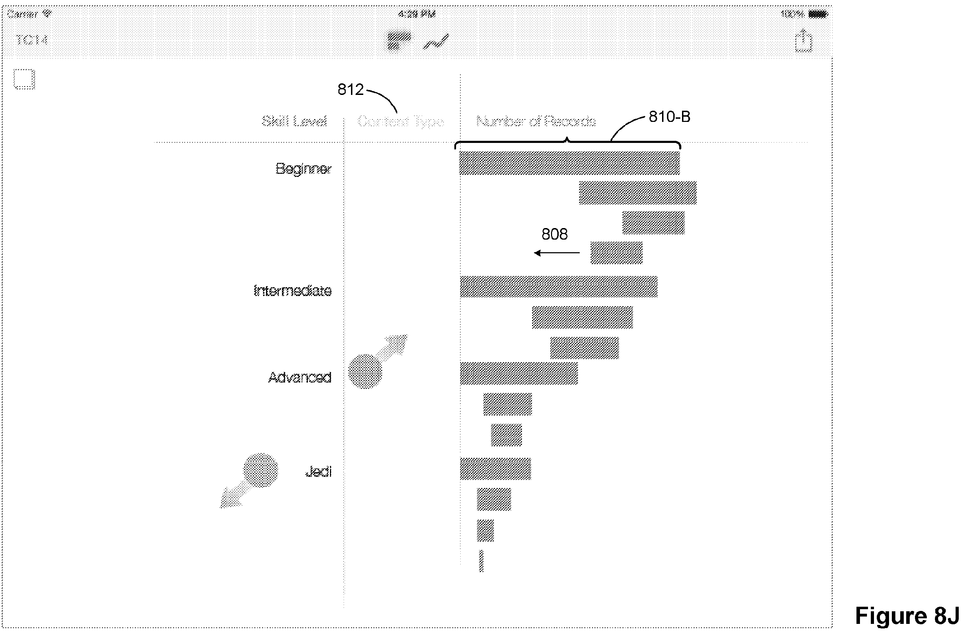

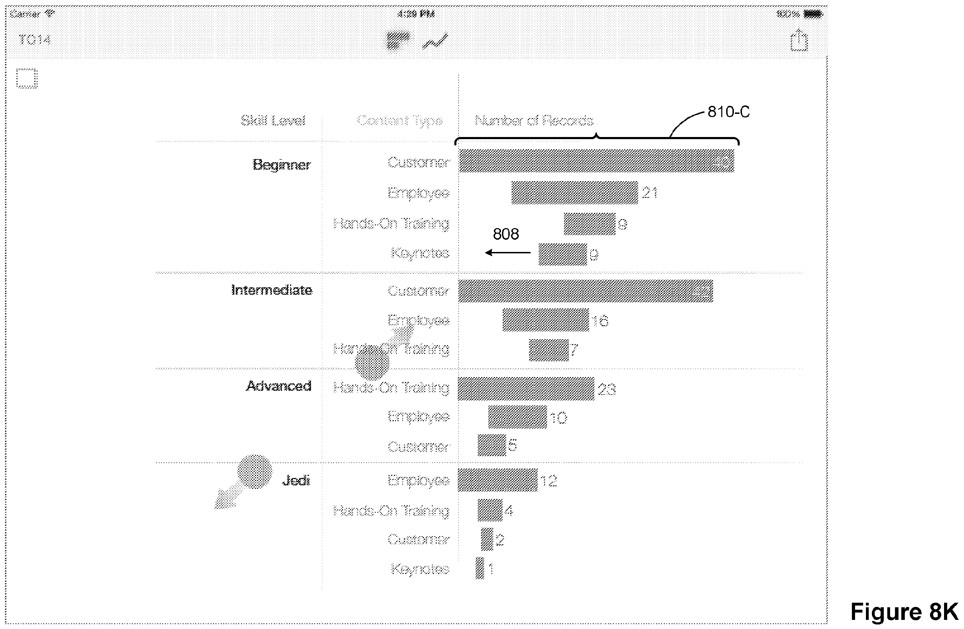

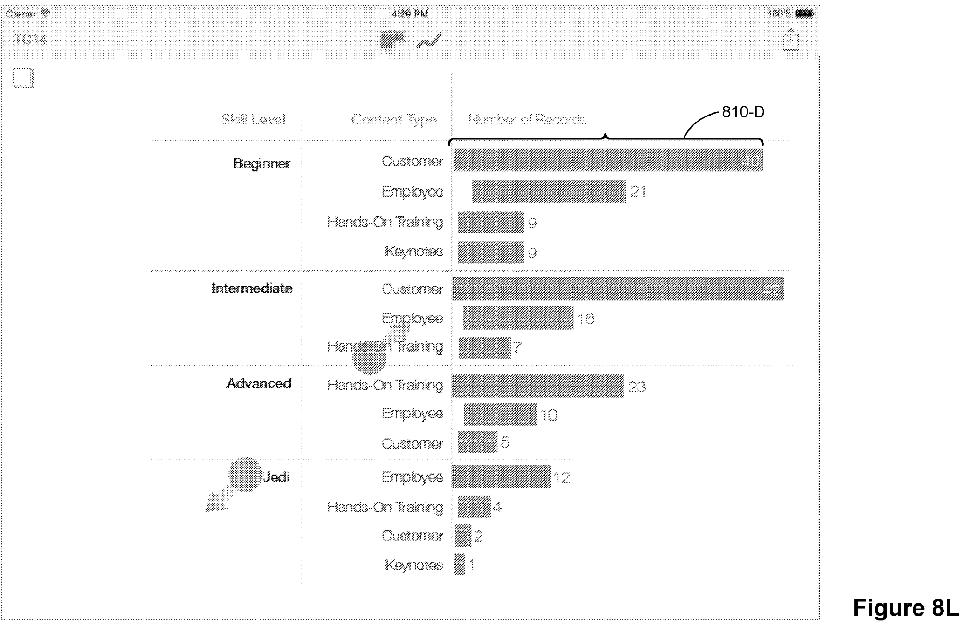

As illustrated in Figures 8F and 8G, in some implementations a portion of the animation includes just vertical motion 804. As illustrated in Figures 8H and 81, at a certain point the motion of the bars in the animation proceed downward and to the left. In this animation, once the bars have moved sufficiently apart vertically, the bars also begin to expand. For example, the top bar expands from its original size 810-A in Figure 81, to a larger size 810-B in Figure 8J, to an even larger size 810-C in Figure 8K, to its final size 810-D in Figure 8L. The expanded sizes utilize more of the available space on the screen. At some point in the animation, the new column header 812 appears, as illustrated in Figure 8J. Typically, the column header 812 is initially dimmed, and shown brighter as the animation progresses.

As described above with respect to Figures 7A - 7L, the new column header 812 may be selected in various ways, and may be swapped once it has been selected. One of skill in the art recognizes that various alternative animations similar to the ones illustrated in Figures 7A - 7L and 8A - 8M are possible based on the specific animations described here.

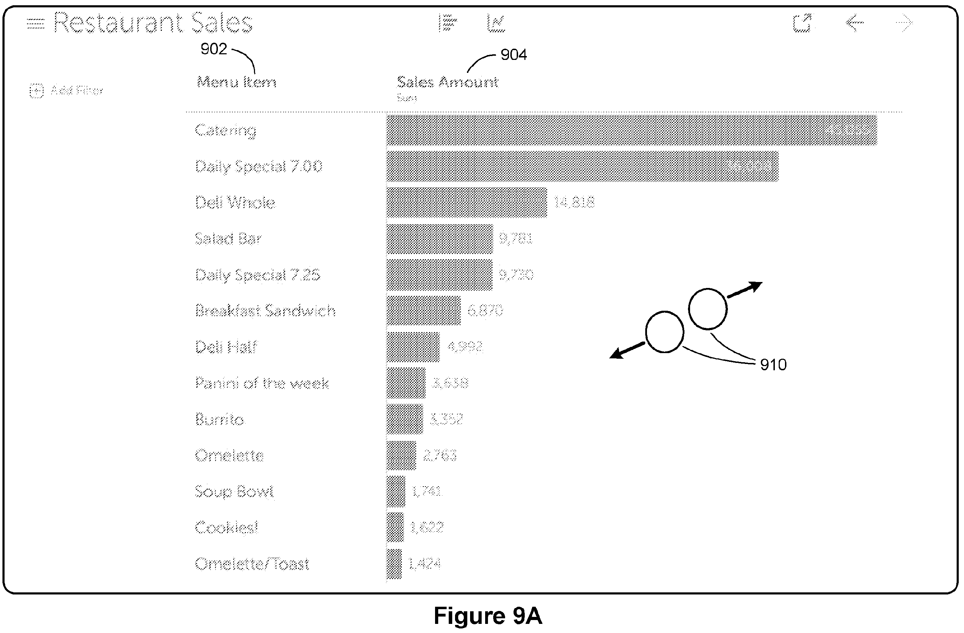

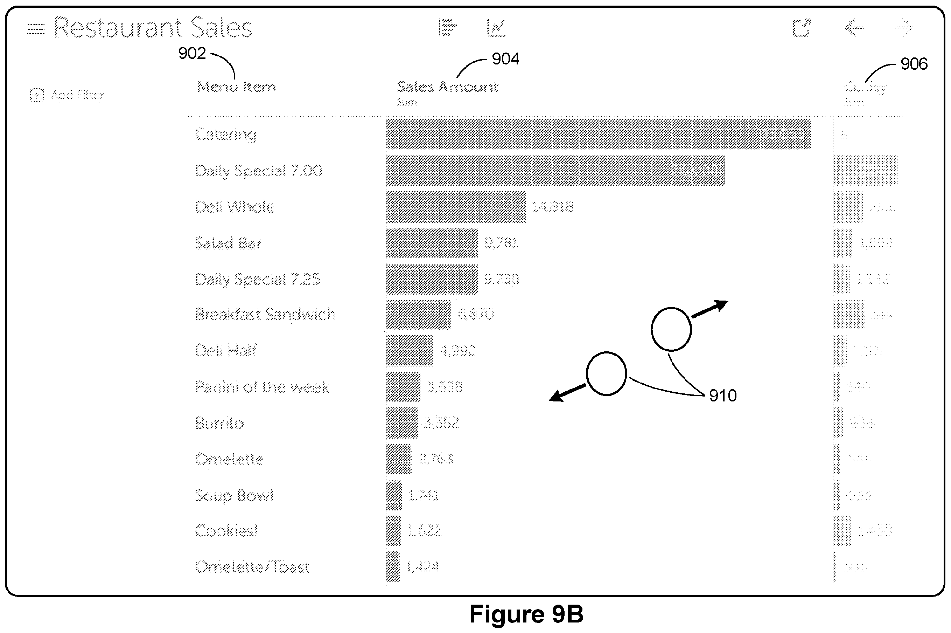

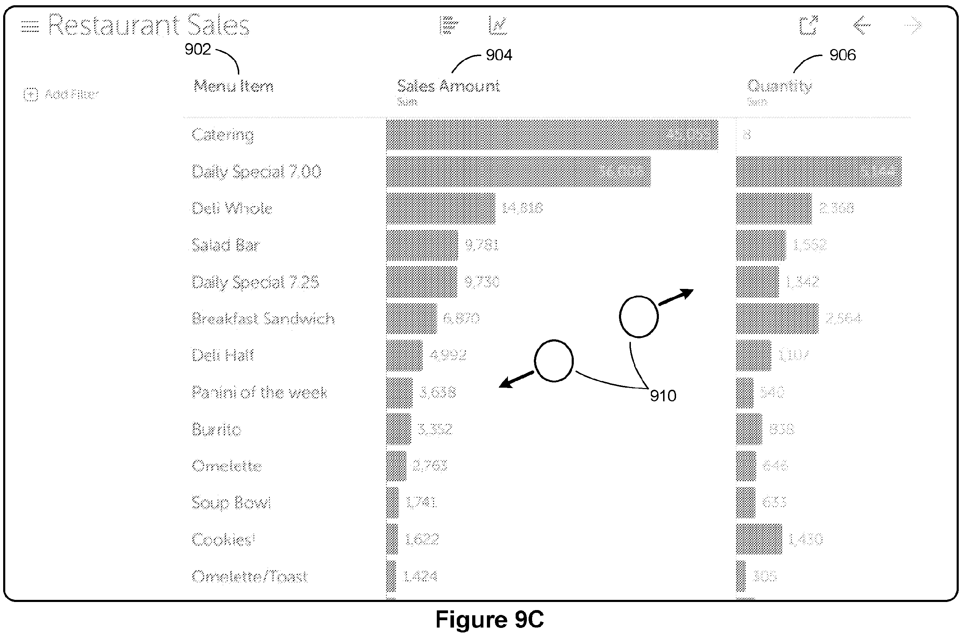

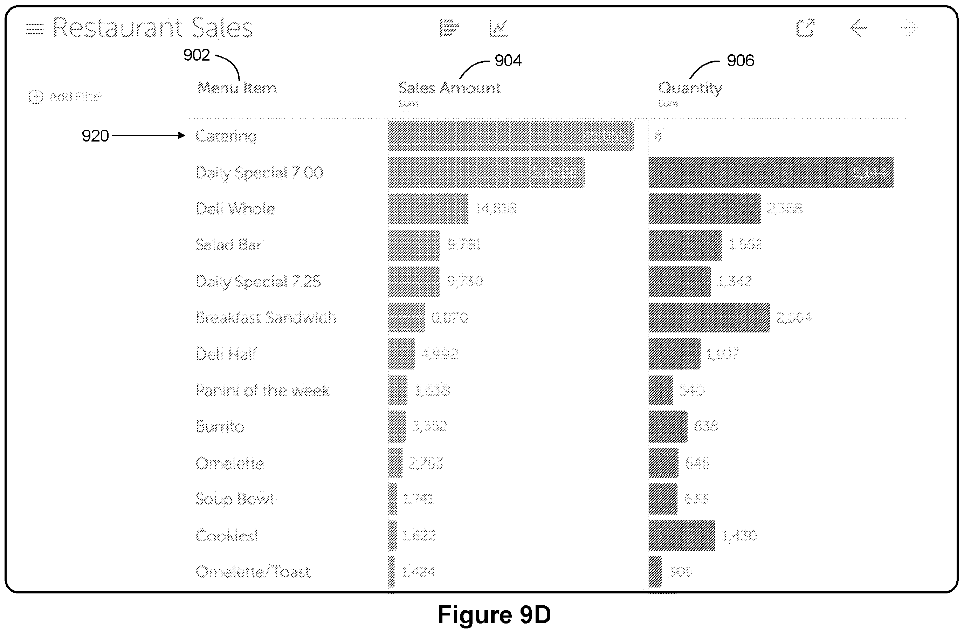

Figures 9A - 9D illustrate a process of adding an additional measure to a data visualization based on an interaction gesture with an existing data visualization, in accordance with some implementations. In Figures 7A - 7L and 8A - 8M, a dimension was added to a data visualization based on a user interaction on the left side of the data visualization. The left side displayed a dimension, so opening up a new column 700 created space to insert another dimension. In Figures 9A - 9D, in contrast, the user opens up a new column 906 on the right hand side of the data visualization, where the measures are being displayed. In this case, opening up a new column displays another measure.

Figure 9A displays a bar chart in which sales amount 904 is displayed for each of the menu items 902. The user establishes two contact points 910 on the right hand side of the data visualization (where the bars are currently displayed), and moves the contact points apart as illustrated by the arrows. As noted previously, this is sometimes referred to as an "unpinch" operation. As the contact points move apart, a new column 906 is displayed, which has data for another measure in the data set. The data visualization application 422 selects the measure in some way, which can include user preferences, prior selection by the user or a group of users, or other techniques. In some implementations, the new column 906 is shown initially dimmed. As the contact points move further apart, the new column becomes wider, and the visual marks (the bars here) in the new column get larger as the visual marks in the sales column 904 get smaller. When the gesture is complete, the data visualization lists the menu items 902 as before, but now shows a first column 904 for the Sales Amount and a second column 906 for the Quantity of sales. Having the two pieces of data can be very useful to compare the number of sales in each category (the quantity) versus the dollar value of those sales. For example, the first row 920 shows that the total sales dollars for catering exceed all of the other menu items, but there were only 8 catering events (which was too small to even show a bar).

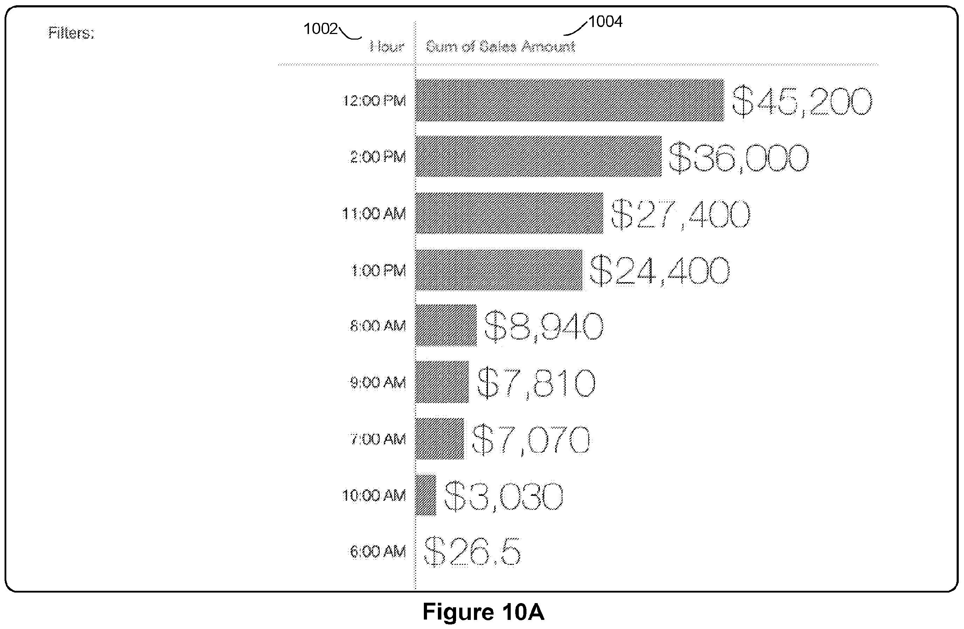

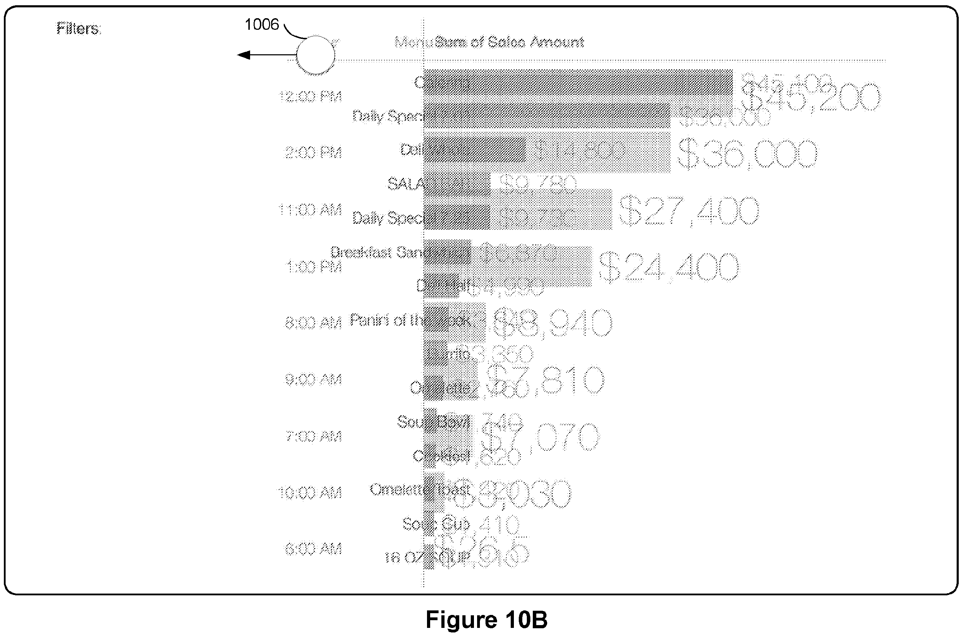

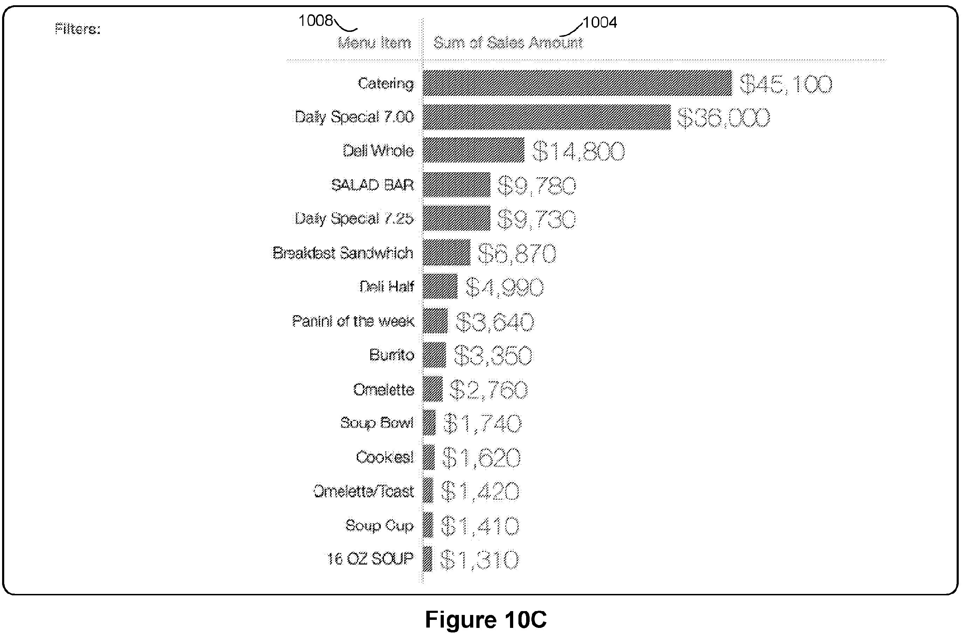

Figures 10A - 10C illustrate an animated transition when selecting a different dimension for an existing data visualization, in accordance with some implementations. Figure 10A shows a user interface including a chart with chart dimension 1002 (Hour) and measure 1004 (Sum of Sales Amount). Figure 10B shows contact 1006 at a position corresponding to chart dimension 1002 and moving to the left. Figure 10B further shows chart dimension 1002 (Hour) being replaced by chart dimension 1008 (Menu Item) via an animated transition. Figure 10C shows a resulting chart with chart dimension 1008 (Menu Item) and measure 1004 (Sum of Sales Amount). Figures 10B and 10C also show measure 1004 (Sum of Sales Amount) updating via an animated transition to correspond to chart dimension 1008 (Menu Item).

The terminology used in the description of the invention herein is for the purpose of describing particular implementations only and is not intended to be limiting of the invention. As used in the description of the invention and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, steps, operations, elements, and/or components, but do not preclude the presence or addition of one or more other features, steps, operations, elements, components, and/or groups thereof.

The foregoing description, for purpose of explanation, has been described with reference to specific implementations. However, the illustrative discussions above are not intended to be exhaustive or to limit the invention to the precise forms disclosed. Many modifications and variations are possible in view of the above teachings. The implementations were chosen and described in order to best explain the principles of the invention and its practical applications, to thereby enable others skilled in the art to best utilize the invention and various implementations with various modifications as are suited to the particular use contemplated, provided they fall within the scope of the appended claims.

## Claims

1. A method, comprising:
at an electronic device (100, 200) with a touch-sensitive surface (102, 202) and a display (102, 204):
displaying a first chart on the display, wherein the first chart concurrently displays a first dimension representing a first qualitative variable (602) including displaying at least one category label corresponding to a respective category of the first qualitative variable (602), a second dimension representing a second qualitative variable (604) including displaying at least one category label corresponding to a respective category of the second qualitative variable (604), and a first measure representing a first quantitative variable (606) associated with the first dimension (602) and the second dimension (604) including displaying at least one visual mark representing a respective value of the first quantitative variable (606) associated with a respective one combination of a category of the first qualitative variable (602) with a category of the second qualitative variable (604);
detecting a first touch input starting at a contact position (610, 618, 622) on the touch-sensitive surface that corresponds to a location on the display of the first chart and moving the contact in a first predefined direction on the touch-sensitive surface;
determining whether the contact position (610, 618, 622) is in a first region displaying a category label corresponding to a first category of the first qualitative variable (602), or is in a second region displaying a category label corresponding to a second category of the second qualitative variable (604), or is in a third region displaying a specific visual mark of the first quantitative variable (606); and
in response to a determination that the contact position is in the first region:
removing from displaying in the first chart all the visual marks associated to a combination of the first category with any category of the second qualitative variable (604), removing from displaying in the first chart all category labels corresponding to a combination of the first category with any category of the second qualitative variable (604);
in response to a determination that the contact position is in the second region:
removing from displaying in the first chart all the visual marks associated to a combination of the second category with any category of the first qualitative variable (602), and removing from displaying in the first chart all the category labels corresponding to a combination of the second category with any category of the first qualitative variable (602);
in response to a determination that the contact position is in the third region:
removing from displaying in the first chart the specific visual mark and removing from displaying in the first chart a third category label corresponding to a category of the second qualitative variable (604), the third category label being associated with the specific visual mark.

2. The method of claim 1, wherein the first touch input is a drag gesture or a swipe gesture that moves in the first predefined direction on the touch-sensitive surface.

3. The method of claim 1, further comprising updating display of the first chart by displaying an indicium that one or more visual marks have been removed.

4. The method of claim 1, wherein displaying the first chart on the display includes displaying an indicium of a number of data points displayed in the first chart, and updating display of the first chart by updating the indicium of the number of data points.

5. The method of claim 3, further comprising:
after removing the one or more visual marks from the first chart, detecting a second touch input at a second location on the touch-sensitive surface that corresponds to the indicium; and
in response to detecting the second touch input, adding back the removed one or
more visual marks corresponding to the indicium to the first chart.

6. The method of claim 1, wherein the removing of all visual marks or the specific visual mark from displaying includes an animated transition.

7. An electronic device (100, 200), comprising:
a display (102, 202);
a touch-sensitive surface (102, 204);
one or more processors (302, 352);
memory (308, 350); and
one or more programs, wherein the one or more programs are stored in the memory (308, 350) and are configured to be executed by the one or more processors (302, 352), the one or more programs including instructions which, when the one or more programs are executed by the one or more processors, cause the one or more processors to carry out any of the method of claims 1 to 6.

8. A non-transitory computer-readable storage medium storing one or more programs, configured for execution by an electronic device (100, 200) with a display (102, 202) and a touch-sensitive surface (102, 204), the one or more programs comprising instructions which, when the one or more programs are executed by the one or more processors of the electronic device of claim 7, cause the one or more processors to carry out any of the methods of claims 1 to 6.

## Patentansprüche

1. Verfahren, das Folgendes umfasst:
auf einer elektronischen Vorrichtung (100, 200) mit einer berührungsempfindlichen Oberfläche (102, 202) und einer Anzeige (102, 204):
das Anzeigen eines ersten Diagramms auf der Anzeige, wobei das erste Diagramm gleichzeitig Folgendes anzeigt: eine erste Dimension, die eine erste qualitative Variable (602) darstellt, beinhaltend das Anzeigen zumindest einer Kategoriebezeichnung, die einer jeweiligen Kategorie der ersten qualitativen Variable (602) entspricht, eine zweite Dimension, die eine zweite qualitative Variable (604) darstellt, beinhaltend das Anzeigen zumindest einer Kategoriebezeichnung, die einer jeweiligen Kategorie der zweiten qualitativen Variable (604) entspricht, und eine erste Kennzahl, die einer ersten quantitativen Variable (606) entspricht, die der ersten Dimension (602) und der zweiten Dimension (604) zugeordnet ist, beinhaltend das Anzeigen zumindest einer visuellen Markierung, die einen jeweiligen Wert der ersten quantitativen Variable (606) darstellt, der einer entsprechenden Kombination einer Kategorie der ersten qualitativen Variable (602) mit einer Kategorie der zweiten qualitativen Variable (604) zugeordnet ist;
das Detektieren einer ersten Berührungseingabe, die an einer Berührungsposition (610, 618, 622) auf der berührungsempfindlichen Oberfläche beginnt, die einer Stelle auf der Anzeige des ersten Diagramms entspricht, und Bewegen der Berührung in eine erste vordefinierte Richtung auf der berührungsempfindlichen Oberfläche;
das Bestimmen, ob die Berührungsposition (610, 618, 622) sich in einem ersten Bereich, der eine Kategoriebezeichnung anzeigt, die einer ersten Kategorie der ersten qualitativen Variable (602) entspricht, oder in einem zweiten Bereich, der eine Kategoriebezeichnung anzeigt, die einer zweiten Kategorie der zweiten qualitativen Variable (604) entspricht, oder in einem dritten Bereich befindet, der eine spezifische visuelle Markierung der ersten quantitativen Variable (606) anzeigt; und
als Antwort darauf, dass bestimmt wird, dass sich die Berührungsposition in dem ersten Bereich findet:
das Entfernen aller visuellen Markierungen, die einer Kombination der ersten Kategorie mit irgendeiner Kategorie der zweiten qualitativen Variablen (604) zugeordnet sind, aus dem Anzeigen im ersten Diagramm, das Entfernen aller Kategoriebezeichnungen, die einer Kombination der ersten Kategorie mit irgendeiner Kategorie der zweiten qualitativen Variablen (604) zugeordnet sind, aus dem Anzeigen im ersten Diagramm;
als Antwort darauf, dass bestimmt wird, dass sich die Berührungsposition in dem zweiten Bereich findet:
das Entfernen aller visuellen Markierungen, die einer Kombination der zweiten Kategorie mit irgendeiner Kategorie der ersten qualitativen Variablen (602) zugeordnet sind, aus dem Anzeigen im ersten Diagramm und das Entfernen aller Kategoriebezeichnungen, die einer Kombination der zweiten Kategorie mit irgendeiner Kategorie der ersten qualitativen Variablen (602) zugeordnet sind, aus dem Anzeigen im ersten Diagramm;
als Antwort darauf, dass bestimmt wird, dass sich die Berührungsposition in dem dritten Bereich findet:
das Entfernen der spezifischen visuellen Markierung aus dem Anzeigen im ersten Diagramm und das Entfernen einer dritten Kategoriebezeichnung, die einer Kategorie der zweiten qualitativen Variablen (604) entspricht, aus dem Anzeigen im ersten Diagramm, wobei die dritte Kategoriebezeichnung der spezifischen visuellen Markierung zugeordnet ist.

2. Verfahren nach Anspruch 1, wobei die erste Berührungseingabe eine Zieh-Geste oder eine Wisch-Geste ist, die sich in die erste vordefinierte Richtung auf der berührungsempfindlichen Oberfläche bewegt.

3. Verfahren nach Anspruch 1, das ferner das Aktualisieren der Anzeige des ersten Diagramms durch Anzeigen einer Kennzeichnung umfasst, dass eine oder mehrere visuelle Markierungen entfernt wurden.

4. Verfahren nach Anspruch 1, wobei das Anzeigen des ersten Diagramms auf der Anzeige das Anzeigen einer Kennzeichnung für eine Anzahl von Datenpunkten, die in dem ersten Diagramm angezeigt werden, und das Aktualisieren der Anzeige des ersten Diagramms durch Aktualisieren der Kennzeichnung für die Anzahl der Datenpunkte umfasst.

5. Verfahren nach Anspruch 3, das ferner Folgendes umfasst:
nach Entfernen der einen oder der mehreren visuellen Markierungen aus dem ersten Diagramm das Detektieren einer zweiten Berührungseingabe an einer zweiten Stelle auf der berührungsempfindlichen Oberfläche, die der Kennzeichnung entspricht; und
als Antwort auf das Detektieren der zweiten Berührungseingabe das erneute Hinzufügen der entfernten einen oder der entfernten mehreren visuellen Markierungen, die der Kennzeichnung entsprechen, zu dem ersten Diagramm.

6. Verfahren nach Anspruch 1, wobei das Entfernen aller visuellen Markierungen oder der spezifischen visuellen Markierung aus der Anzeige einen animierten Übergang umfasst.

7. Elektronische Vorrichtung (100, 200), die Folgendes umfasst:
eine Anzeige (102, 202);
eine berührungsempfindliche Oberfläche (102, 204);
einen oder mehrere Prozessoren (302, 352);
Speicher (308, 350) und
ein oder mehrere Programme, wobei das eine oder die mehreren Programme in dem Speicher (308, 350) gespeichert sind und ausgelegt sind, um durch den einen oder die mehreren Prozessoren (302, 352) ausgeführt zu werden, wobei das eine oder die mehreren Programme Befehle umfassen, die, wenn das eine oder die mehreren Programme durch den einen oder die mehreren Prozessoren ausgeführt werden, bewirken, dass der eine oder die mehreren Prozessoren ein Verfahren nach Anspruch 1 bis 6 ausführen.

8. Nichtflüchtiges computerlesbares Speichermedium, auf dem ein oder mehrere Programme gespeichert sind, die ausgelegt sind, um durch eine elektronische Vorrichtung (100, 200) mit einer Anzeige (102, 202) und einer berührungsempfindlichen Oberfläche (102, 204) ausgeführt zu werden, wobei das eine oder die mehreren Programme Befehle umfassen, die, wenn das eine oder die mehreren Programme durch den einen oder die mehreren Prozessoren einer elektronischen Vorrichtung nach Anspruch 7 ausgeführt werden, bewirken, dass der eine oder die mehreren Prozessoren ein Verfahren nach Anspruch 1 bis 6 ausführen.

## Revendications

1. Procédé, comprenant les étapes consistant à :
au niveau d'un dispositif électronique (100, 200) pourvu d'une surface tactile (102, 202) et d'un écran d'affichage (102, 204) :
afficher un premier graphique sur l'écran d'affichage, dans lequel le premier graphique affiche simultanément une première dimension représentant une première variable qualitative (602) comprenant un affichage d'au moins une étiquette de catégorie correspondant à une catégorie respective de la première variable qualitative (602), une seconde dimension représentant une seconde variable qualitative (604) comprenant un affichage d'au moins une étiquette de catégorie correspondant à une catégorie respective de la seconde variable qualitative (604), et une première mesure représentant une première variable quantitative (606) associée à la première dimension (602) et à la seconde dimension (604) comprenant un affichage d'au moins un repère visuel représentant une valeur respective de la première variable quantitative (606) associée à une combinaison respective d'une catégorie de la première variable qualitative (602) avec une catégorie de la seconde variable qualitative (604) ;
détecter une première entrée tactile au niveau d'une position de contact (610, 618, 622) sur la surface tactile qui correspond à un emplacement situé sur l'écran d'affichage du premier graphique et déplacer le contact dans une première direction prédéfinie sur la surface tactile ;
déterminer si la position de contact (610, 618, 622) se situe dans une première région affichant une étiquette de catégorie correspondant à une première catégorie de la première variable qualitative (602), ou se situe dans une deuxième région affichant une étiquette de catégorie correspondant à une deuxième catégorie de la seconde variable qualitative (604), ou se situe dans une troisième région affichant un repère visuel spécifique de la première variable quantitative (606) ; et
en réponse à une détermination que la position de contact se situe dans la première région :
retirer de l'affichage dans le premier graphique tous les repères visuels associés à une combinaison de la première catégorie avec n'importe quelle catégorie de la seconde variable qualitative (604), retirer de l'affichage dans le premier graphique toutes les étiquettes de catégorie correspondant à une combinaison de la première catégorie avec n'importe quelle catégorie de la seconde variable qualitative (604) ;
en réponse à une détermination que la position de contact se situe dans la deuxième région :
retirer de l'affichage dans le premier graphique tous les repères visuels associés à une combinaison de la deuxième catégorie avec n'importe quelle catégorie de la première variable qualitative (602), et retirer de l'affichage dans le premier graphique toutes les étiquettes de catégorie correspondant à une combinaison de la deuxième catégorie avec n'importe quelle catégorie de la première variable qualitative (602) ;
en réponse à une détermination que la position de contact se situe dans la troisième région :
retirer de l'affichage dans le premier graphique le repère visuel spécifique et retirer de l'affichage dans le premier graphique une étiquette de troisième catégorie correspondant à une catégorie de la seconde variable qualitative (604), l'étiquette de troisième catégorie étant associée au repère visuel spécifique.

2. Procédé selon la revendication 1, dans lequel la première entrée tactile est un geste de glissement ou un geste de balayage qui se déplace dans la première direction prédéfinie sur la surface tactile.

3. Procédé selon la revendication 1, comprenant en outre l'étape consistant à mettre à jour l'affichage du premier graphique en affichant un indice indiquant qu'un ou plusieurs repères visuels ont été retirés.

4. Procédé selon la revendication 1, dans lequel l'affichage du premier graphique sur l'écran d'affichage comprend un affichage d'un indice d'un certain nombre de points de données affichés dans le premier graphique, et une mise à jour de l'affichage du premier graphique en mettant à jour l'indice du nombre de points de données.

5. Procédé selon la revendication 3, comprenant en outre :
après avoir retiré les un ou plusieurs repères visuels du premier graphique, détecter une seconde entrée tactile dans un second emplacement sur la surface tactile qui correspond à l'indice ; et
en réponse à la détection de la seconde entrée tactile, ajouter en retour les un ou plusieurs repères visuels supprimés correspondant à l'indice au premier graphique.

6. Procédé selon la revendication 1, dans lequel la suppression de tous les repères visuels ou du repère visuel spécifique de l'affichage comprend une transition animée.

7. Dispositif électronique (100, 200) comprenant :
un écran d'affichage (102, 202) ;
une surface tactile (102, 204) ;
un ou plusieurs processeurs (302, 352) ;
une mémoire (308, 350) ; et
un ou plusieurs programmes, dans lequel les un ou plusieurs programmes sont stockés dans la mémoire (308, 350) et sont configurés pour être exécutés par les un ou plusieurs processeurs (302, 352), les un ou plusieurs programmes comprenant des instructions qui, lorsque les un ou plusieurs programmes sont exécutés par les un ou plusieurs processeurs, amènent les un ou plusieurs processeurs à exécuter l'un quelconque des procédés des revendications 1 à 6.

8. Support de stockage lisible par ordinateur non transitoire stockant un ou plusieurs programmes, configurés pour être exécutés par un dispositif électronique (100, 200) avec un écran d'affichage (102, 202) et une surface tactile (102, 204), les un ou plusieurs programmes comprenant des instructions qui, lorsque les un ou plusieurs programmes sont exécutés par les un ou plusieurs processeurs du dispositif électronique selon la revendication 7, amènent les un ou plusieurs processeurs à exécuter l'un quelconque des procédés selon les revendications 1 à 6.
